# EUROPÄISCHE PATENTSCHRIFT

(11) **EP 4 680 449 B1**
(45) Veröffentlichungstag und Bekanntmachung des Hinweises auf die Patenterteilung: **09.09.2026**
(21) Anmeldenummer: 24709730.6
(22) Anmeldetag: 06.03.2024
(51) Int. Cl.: B29C 51/10, B29C 51/20, B29C 51/42, A61C 13/087, B29L 31/00

(54) **DRUCKFORMVORRICHTUNG SOWIE VERFAHREN ZUR DURCHFÜHRUNG EINES TIEFZIEHVORGANGS**
PRESSURE-MOULDING APPARATUS AND METHOD FOR CARRYING OUT A THERMOFORMING OPERATION
APPAREIL DE MOULAGE SOUS PRESSION ET PROCÉDÉ DE RÉALISATION D'UNE ACTION DE THERMOFORMAGE

(30) Priorität: 13.03.2023 DE 102023106142
(43) Veröffentlichungstag der Anmeldung: 21.01.2026
(73) Patentinhaber: SCHEU-DENTAL GmbH, 58642 Iserlohn (DE)
(72) Erfinder: JO, Yong-min, 40237 Düsseldorf (DE); PASCADOPOLI, Andrea, 44229 Dortmund (DE); KALTHAUS, Ralf, 58091 Hagen (DE)
(74) Vertreter: Bauer PSU PartG mbB
(86) Internationale Anmeldenummer: PCT/EP2024/055813
(87) Internationale Veröffentlichungsnummer: WO 2024/188746

(56) Entgegenhaltungen:
- CN-A- 112 895 395
- DE-B4- 10 307 688
- US-A1- 2017 144 360

## Beschreibung

Die vorliegende Anmeldung betrifft eine Druckformvorrichtung für die Verwendung in der dentalen Tiefziehtechnik gemäß dem Oberbegriff von Anspruch 1. Ferner betrifft die vorliegende Anmeldung ein Verfahren zur Durchführung eines Tiefziehvorgangs gemäß dem Oberbegriff von Anspruch 11.

Die Anwendung einer Druckformvorrichtung in der dentalen Tiefziehtechnik betrifft insbesondere die Herstellung von in der Technik als "Aligner" bezeichneten Zahnschienen. Diese können im Rahmen kieferorthopädischer Behandlungen zur aktiven Bewegung oder zum passiven Halten von Zähnen eines jeweiligen Patienten eingesetzt werden und dienen auf diese Weise der Korrektur oder Vorbeugung von Zahnfehlstellungen.

### Stand der Technik

Eine Druckformvorrichtung ist im Stand der Technik bereits bekannt. Hierzu wird beispielsweise auf das Produkt "Biostar" der Anmelderin der vorliegenden Patentanmeldung verwiesen. Ferner sind entsprechende Druckformvorrichtungen von den Herstellern Erkodent Erick Kopp, beispielsweise in Form des "Erkopress 240", oder Dreve Dentamid, beispielsweise in Form des "Vacfomat V9", bekannt.

Die bekannten Vorrichtungen unterliegen unterschiedlichen Nachteilen. Insbesondere hat sich der Wunsch herausgebildet, aktive kieferorthopädische Behandlungselemente, die mittels dentaler Tiefziehtechnik hergestellt werden, mit überschaubarem Aufwand in vergleichsweise großen Stückzahlen herstellen zu können, ohne dass hierdurch die Qualität einer jeden einzelnen Abformung gegenüber einer Einzelabformung gemindert wird. Für die Erreichung einer hohen Qualität ist es insbesondere erforderlich, die jeweilige Tiefziehfolie während des Heizschritts eines Tiefziehvorgangs gleichmäßig zu erwärmen und die Temperatur der Tiefziehfolie auf der Seite, die dem Kiefermodell zugewandt ist, möglichst genau einstellen zu können. Diese Möglichkeit soll unabhängig davon bestehen, ob im Zuge eines einzigen Tiefziehvorgangs lediglich ein einziges Behandlungselement oder gleichzeitig eine Mehrzahl von Behandlungselementen hergestellt wird.

Mittels der in der WO 2020/10225 dargestellten Druckformvorrichtung soll eine besonders gleichmäßige Erwärmung der Tiefziehfolie erreicht werden. Das Modell sowie die Tiefziehfolie werden derart auf einem Modellträger platziert, dass das Modell unterhalb der Tiefziehfolie angeordnet ist. Der bestückte Modellträger wird auf ein Förderband gelegt und zu einem zweiten Förderband transportiert. Entlang einer Förderachse des zweiten Förderbands finden nacheinander ein Heizschritt sowie ein Formschritt statt. Bei dem Heizschritt wird die oberhalb eines Modells gelagerte Tiefziehfolie zunächst von einem ersten und anschließend von einem zweiten Heizgerät erhitzt, wobei die beiden Heizgeräte die Tiefziehfolie von einer dem Modell abgewandten Seite erhitzen. Anschließend wird das Modell mit der darüber befindlichen, erhitzten Tiefziehfolie zu einer Druckeinrichtung transportiert, sodass der Formschritt vollzogen werden kann. Parallel zu dem Formschritt kann jedes Heizgerät jeweils eine weitere Tiefziehfolie aufheizen.

Die Druckschrift DE 103 07 688 B4 offenbart eine Druckformvorrichtung gemäß den Oberbegriff des Anspruchs 1 und gemäß den Oberbegriff des Anspruchs 11.

### Aufgabe

Der vorliegenden Anmeldung liegt die Aufgabe zugrunde, eine Druckformvorrichtung bereitzustellen, mittels der möglichst einfach größere Stückzahlen von Abformungen von Kiefermodellen durchgeführt werden können, ohne dass es für einzelne Abformungen zu Qualitätseinbußen kommt.

### Lösung

Die zugrunde liegende Aufgabe wird erfindungsgemäß mittels einer Druckformvorrichtung mit den Merkmalen des Anspruchs 1 gelöst. Vorteilhafte Ausgestaltungen ergeben sich aus den zugehörigen Unteransprüchen.

Die Druckformvorrichtung umfasst ein Gehäuse, einen Folienträger zur Lagerung mindestens einer Tiefziehfolie und mindestens eine zumindest teilweise in dem Gehäuse angeordnete Arbeitseinheit. Die Arbeitseinheit umfasst ihrerseits eine Heizeinrichtung, einen Modellträger und eine Druckeinrichtung. Die Heizeinrichtung der Arbeitseinheit ist dazu vorgesehen und eingerichtet, die in dem Folienträger gelagerte Tiefziehfolie zu erhitzen. Auf diese Weise wird die Tiefziehfolie flexibel bzw. "weich" und mithin verformbar, sodass sie in bekannter Weise unter Aufbringung eines Drucks über ein Kiefermodell tiefgezogen werden kann. Bei der Heizeinrichtung kann es sich beispielsweise um einen Quarzrohrstrahler handeln, der einen Hochtemperatur-Heizdraht enthält und mit einer Oberflächenbeschichtung versehen ist, die kurzwellige Strahlung filtert. Für eine mögliche Ausgestaltung der Heizeinrichtung wird auf das deutsche Patent DE 103 07 688 B4.

Das Kiefermodell, über das die Tiefziehfolie nach Abschluss eines Heizschritts tiefgezogen werden soll, ist auf dem Modellträger der Arbeitseinheit lagerbar. Es kann beispielsweise basierend auf einer Abformung oder einer Modellierung eines Ober- oder Unterkiefers eines Patienten hergestellt sein, beispielsweise aus Gips. Ebenfalls ist es denkbar, dass das Kiefermodell mit Mitteln des 3D-Drucks hergestellt ist, basierend auf einer digitalen Abformung oder digitalen Modellierung eines Ober- oder Unterkiefers eines Patienten. Der Modellträger kann bevorzugt Entlüftungsöffnungen aufweisen, die einen Austritt von Luft im Zuge eines Tiefziehvorgangs einer Tiefziehfolie über ein auf dem Modellträger gelagertes Kiefermodell ermöglichen. Auf diese Weise kann sich die Tiefziehfolie in gewünschter Form an das Kiefermodell anlegen, wobei ggf. zwischen Tiefziehfolie und Modellträger eingeschlossene Luft durch die Entlüftungsöffnungen entweichen kann und hierdurch die Bildung von Lufteinschlüssen zwischen Tiefziehfolie und Kiefermodell vermieden wird. Der Modellträger ist von seinen Abmessungen her in der Regel und bevorzugt dazu vorgesehen und eingerichtet, genau ein Kiefermodell aufzunehmen. Hierzu kann der Modellträger insbesondere eine kreisförmige Auflagefläche für ein mittiges Auflegen eines jeweiligen Kiefermodells aufweisen.

Die Druckeinrichtung der Arbeitseinheit dient dazu, einen pneumatischen Druck auf die erhitzte Tiefziehfolie auszuüben, sodass diese sich über das Kiefermodell legt bzw. an dieses "anschmiegt" und hierdurch das Kiefermodell in der gewünschten Weise abformt. Grundsätzlich kann die Druckeinrichtung dazu eingerichtet sein, einen Überdruck oder einen Unterdruck zu erzeugen, wobei bei der Erzeugung eines Überdrucks typischerweise von einer dem Kiefermodell abgewandten Seite der Tiefziehfolie her letztere gewissermaßen auf das Kiefermodell gedrückt wird und sich hierdurch passgenau an das Kiefermodell anlegt. Bei Aufbringung eines Unterdrucks wird die Tiefziehfolie hingegen in der Regel von der dem Kiefermodell zugewandten Seite auf das Kiefermodell gezogen und hierdurch passgenau an letzteres angelegt. Beide Arten der Abformung werden allgemein als "Tiefziehen" bezeichnet.

Um einen Tiefziehvorgang vollständig durchzuführen, werden zumindest zwei Schritte durchgeführt, nämlich zum einen ein Heizschritt und zum anderen ein Formschritt. Diese Schritte des Tiefziehvorgangs können unmittelbar nacheinander oder mit einer Unterbrechung zwischen den Schritten oder mit einer Durchführung mindestens eines weiteren Zwischenschritts zwischen den Schritten durchgeführt werden.

In dem Heizschritt wird in der oben beschriebenen Weise die Tiefziehfolie mittels der Heizeinrichtung erhitzt, sodass sie weich wird und dazu geeignet ist, über ein jeweiliges Kiefermodell tiefgezogen zu werden. Die Beurteilung, ob die Tiefziehfolie für die Durchführung des Formschritts ausreichend erhitzt ist, kann anhand verschiedener Parameter bemessen werden. Beispielsweise kann die Heizeinrichtung für einen vorgegebenen Zeitraum ("Heizzeit") aktiviert werden. Ebenfalls ist es denkbar, eine Oberflächentemperatur der Tiefziehfolie zu überwachen und in Abhängigkeit der Temperatur den Heizschritt zu beenden, beispielsweise dann, wenn die Temperatur der Tiefziehfolie einen vorgegebenen Sollwert erreicht.

Nachdem der Heizschritt abgeschlossen ist, wird entweder mittelbar oder unmittelbar der Formschritt durchgeführt, im Zuge dessen die Tiefziehfolie mit pneumatischem Druck beaufschlagt und hierdurch über das auf dem Modellträger gelagerte Kiefermodell tiefgezogen wird.

Für die Bereitstellung des pneumatischen Drucks umfasst die Druckeinrichtung einen Druckzylinder, der beispielsweise mittels einer Druckleitung mit einem Druckerzeuger verbunden sein kann. Letzterer kann beispielsweise von einem Kompressor gebildet sein, der zur Verdichtung von Luft geeignet ist. Um die erhitzte Tiefziehfolie über das Kiefermodell tiefzuziehen, sind der Druckzylinder und der Modellträger entlang einer Arbeitsachse der Arbeitseinheit relativ aufeinander zu bewegbar. Dies führt dazu, dass die Druckeinrichtung zur Durchführung des Formschritts in unmittelbaren oder mittelbaren Wirkeingriff mit dem Modellträger bringbar ist. Bei einem mittelbaren Eingriff kann die Druckeinrichtung beispielsweise unmittelbar mit der Tiefziehfolie in Kontakt treten, wobei der Wirkeingriff der Druckeinrichtung mit dem Modellträger über die zwischengeschaltete Tiefziehfolie entsteht. Hierbei schließt der Druckzylinder dicht mit einer Oberfläche der Tiefziehfolie ab, sodass die Tiefziehfolie einen in dem Druckzylinder gebildeten Druckraum begrenzt. Ungeachtet, ob ein mittelbarer oder unmittelbarer Wirkeingriff zwischen Druckeinrichtung und Tiefziehfolie besteht, wird infolge des Aufbaus eines pneumatischen Drucks in dem Druckzylinder die Tiefziehfolie über das Kiefermodell tiefgezogen, wobei sich die Tiefziehfolie in der gewünschten Weise unmittelbar an die Oberfläche des Kiefermodells anlegt und letzteres hierdurch passgenau abformt. Der Druck kann sowohl in Form eines Überdrucks als auch in Form eines Unterdrucks vorliegen.

Die erfindungsgemäße Druckformvorrichtung ist dadurch gekennzeichnet, dass sowohl die Heizeinrichtung als auch der Modellträger auf derselben Seite der Tiefziehfolie angeordnet sind. Auf diese Weise ist die Möglichkeit gegeben, die Tiefziehfolie in dem Heizschritt des Tiefziehvorgangs von der Seite aus mittels der Heizeinrichtung zu erhitzen, mit der die Tiefziehfolie in dem späteren Formschritt des Tiefziehvorgangs über das jeweilige Kiefermodell tiefgezogen wird. Dies hat den Vorteil, dass die Tiefziehfolie präzise erhitzt werden kann, wodurch die Qualität der sich in dem Formschritt anschließenden Abformung des jeweiligen Kiefermodells besonders gut sicherstellen lässt.

Der Erfindung liegt im Weiteren die Überlegung zugrunde, dass es für die Anordnung von Heizeinrichtung und Modellträger auf derselben Seite der Tiefziehfolie besonders sinnvoll ist, diese nacheinander in Relativpositionen zu der Tiefziehfolie zu bringen, die zunächst ein gezieltes Erhitzen der Tiefziehfolie und anschließend das Abformen des jeweiligen Kiefermodells erlauben. Entsprechend ist die Druckformvorrichtung erfindungsgemäß derart ausgebildet, dass die Heizeinrichtung und der Modellträger mittels einer Bewegungseinrichtung wechselweise in eine entlang beziehungsweise auf der Arbeitsachse befindliche Arbeitsstellung überführbar sind.

Insbesondere kann zunächst in dem Heizschritt die Heizeinrichtung derart relativ zu der Tiefziehfolie angeordnet sein, dass mittels der Heizeinrichtung ein Bereich der Tiefziehfolie erwärmt wird, der zum späteren Tiefziehen über das Kiefermodell vorgesehen ist. Um letzteres in dem Formschritt zu leisten, wird das Kiefermodell nach Abschluss des Heizschritts in die Position, nämlich die Arbeitsstellung gebracht, die zuvor die Heizeinrichtung innehatte, sodass anschließend das Kiefermodell zum Tiefziehen des erwärmten Bereichs der Tiefziehfolie über das Kiefermodell ausgerichtet ist. Die Tiefziehfolie verbleibt vorzugsweise während des Heizschritts und im Zuge der Vorbereitung für den Formschritt in einer Position und wird nicht bewegt.

Auf diese Weise ist die Möglichkeit geschaffen, dass zunächst in dem Heizschritt des Tiefziehvorgangs die Heizeinrichtung auf einer Seite der Tiefziehfolie platziert ist, sodass die Tiefziehfolie mittels der Heizeinrichtung erhitzt werden kann. Die Heizeinrichtung befindet sich mithin in ihrer Arbeitsstellung, in der sie auf beziehungsweise entlang der Arbeitsachse der Arbeitseinheit angeordnet ist. Beispielsweise ist die Heizeinrichtung bei Vorliegen in ihrer Arbeitsstellung vertikal unterhalb der Tiefziehfolie angeordnet. Nach dem Abschluss des Heizschritts kann sodann die Heizeinrichtung mittels der Bewegungseinrichtung aus ihrer Arbeitsstellung wegbewegt werden, wobei im Zuge dessen der Modellträger mit einem darauf platzierten Kiefermodell in dessen Arbeitsstellung entlang beziehungsweise auf der Arbeitsachse der Arbeitseinheit überführt wird. Daraufhin befindet sich folglich der Modellträger in einer solchen Position relativ zu der erhitzten Tiefziehfolie, dass letztere in dem Formschritt des Tiefziehvorgangs über das Kiefermodell, das auf dem Modellträger gelagert ist, tiefgezogen werden kann. Die Bewegungseinrichtung ist mithin dazu vorgesehen und eingerichtet, die Heizeinrichtung und den Modellträger der Arbeitseinheit wechselweise in eine solche Stellung (nämlich die jeweilige Arbeitsstellung) relativ zu der Tiefziehfolie zu bringen, dass der Tiefziehvorgang bestimmungsgemäß durchgeführt werden kann.

In bevorzugter Ausgestaltung sind die Heizeinrichtung und der Modellträger auf einer der Druckeinrichtung abgewandten Seite der Tiefziehfolie angeordnet. Mit anderen Worten ist es vorteilhaft, wenn die Tiefziehfolie zwischen der Druckeinrichtung auf der einen Seite und der Heizeinrichtung bzw. dem Modellträger auf der anderen Seite angeordnet ist. Hierdurch ist das Zusammenwirken der Tiefziehfolie mit den verschiedenen Einrichtungen der Arbeitseinheit besonders gut möglich.

Beispielsweise und vorzugsweise können die einzelnen Arbeitsorgane der Arbeitseinheit entlang einer vertikalen Arbeitsachse in folgender Reihenfolge von oben nach unten angeordnet sein: Druckeinrichtung - Tiefziehfolie - Heizeinrichtung/Modellträger (je nachdem, welches der beiden letztgenannten Arbeitsorgane sich entlang bzw. auf der Arbeitsachse in seiner Arbeitsstellung befindet).

Die erfindungsgemäße Druckformvorrichtung hat viele Vorteile. Insbesondere ermöglicht sie das Erhitzen der Tiefziehfolie von der Seite, die über das Kiefermodell tiefgezogen wird. Mit anderen Worten wirkt die von der Heizeinrichtung erzeugte Wärmestrahlung unmittelbar auf die Oberfläche der Tiefziehfolie, mit der letztere im Zuge des Formschritts des Tiefziehvorgangs in unmittelbaren Kontakt mit einer korrespondierenden Oberfläche des jeweiligen Kiefermodells tritt. Es hat sich gezeigt, dass hierdurch die Temperatur an den Stellen der Tiefziehfolie, auf die es für eine hochqualitative Abformung ankommt, besonders genau eingestellt werden kann. Im Stand der Technik wird hingegen oftmals eine jeweilige Tiefziehfolie mittels einer Heizeinrichtung von einer dem Kiefermodell bzw. dem Modellträger abgewandten Seite aus erwärmt. Hierdurch ist eine Oberflächentemperatur der Tiefziehfolie auf der dem Modellträger zugewandten Seite weniger gut kontrollierbar. Mithin ist die Sicherstellung einer immer gleich hohen Qualität der hergestellten Abformungen im Stand der Technik ebenfalls weniger gut kontrollierbar.

In einer bevorzugten Ausgestaltung der Druckformvorrichtung sind die Heizeinrichtung und der Modellträger mittels der Bewegungseinrichtung innerhalb einer senkrecht zu der Arbeitsachse der Arbeitseinheit orientierten Wirkebene bewegbar. Hierbei kann die Arbeitsachse insbesondere vertikal orientiert sein, sodass die Wirkebene bei dieser Ausgestaltung horizontal orientiert ist. Die Bewegungseinrichtung kann bei dieser Ausgestaltung beispielsweise von einer Schublade gebildet sein, die innerhalb der Wirkebene linear entlang einer Bewegungsachse beweglich ausgebildet ist. Hierzu kann die Druckformvorrichtung beispielsweise über Schienen verfügen, entlang derer die als Schublade ausgebildete Bewegungseinrichtung verschieblich gelagert ist. Die Ausbildung der Bewegungseinrichtung in dieser Weise hat den Vorteil, dass die alternierende Überführung der Heizeinrichtung und des Modellträgers jeweils in deren Arbeitsstellung besonders einfach händisch oder motorisch durchgeführt werden kann.

In einer besonders vorteilhaften Ausgestaltung der Druckformvorrichtung umfasst selbige eine Mehrzahl von Arbeitseinheiten, die jeweils eine Heizeinrichtung, einen Modellträger und eine Druckeinrichtung umfassen. Die Arbeitsachsen der Arbeitseinheiten sind bevorzugt jeweils vertikal sowie parallel zueinander orientiert. Ferner kann es bei der Anordnung einer Mehrzahl von Arbeitseinheiten vorteilhaft sein, wenn diese "in Reihe" nebeneinander positioniert sind, sodass die Arbeitsachsen der Arbeitseinheiten in einer gemeinsamen Arbeitsebene angeordnet sind. Gemäß vorstehender Beschreibung ist diese Arbeitsebene vorteilhafterweise vertikal orientiert. Die Anordnung einer Mehrzahl von Arbeitseinheiten hat den Vorteil, dass im Rahmen eines einzigen Tiefziehvorgangs eine Mehrzahl von Abformungen verschiedener Kiefermodelle vorgenommen werden kann. Beispielsweise ist es denkbar, dass die Druckformvorrichtung insgesamt vier Arbeitseinheiten umfasst, sodass im Zuge eines Tiefziehvorgangs in einem Heizschritt insgesamt entweder vier einzelne Tiefziehfolien oder vier Bereiche einer einzigen, "großen" Tiefziehfolie erhitzt werden, die in einem späteren Formschritt jeweils über ein zugeordnetes Kiefermodell tiefgezogen werden. Die Druckeinrichtungen der Arbeitseinheiten können bei einer solchen Ausgestaltung beispielsweise mittels eines gemeinsamen Druckerzeugers mit pneumatischem Druck versorgt werden. Somit ist es denkbar, dass die Druckformvorrichtung einen Kompressor umfasst, der mittels Druckleitungen jeweils mit den Druckeinrichtungen der Arbeitseinheiten wirkverbunden ist.

Ein besonderer Vorteil bei der Verwendung mehrerer Arbeitseinheiten besteht darin, dass jede Arbeitseinheit über ihren eigenen Modellträger verfügt, der dimensioniert ist, ein einziges Kiefermodell aufzunehmen. Auf diese Weise wird für die Abformung einer Mehrzahl von Kiefermodellen für jedes Kiefermodell eine eigene Tiefziehfolie oder ein eigener zugeordneter Abschnitt einer gemeinsamen Tiefziehfolie verwendet. Dies hat den Vorteil, dass sich die Abformungen der Kiefermodelle nicht gegenseitig negativ beeinflussen, beispielsweise infolge einer gemeinsamen Positionierung auf einem einzigen Modellträger. Letzteres kann dazu führen, dass die Kiefermodelle zu eng nebeneinander platziert werden und es zu einer beschriebenen Beeinflussung kommt, die sich negativ auf die Qualität der Abformung auswirken kann.

Sofern die Druckformvorrichtung eine Mehrzahl von Arbeitseinheiten umfasst, kann es des Weiteren vorteilhaft sein, wenn der Folienträger rechteckförmig ausgebildet ist. Hierbei erstreckt sich der Folienträger entlang sämtliche Arbeitseinheiten und weist eine der Anzahl der Arbeitseinheiten entsprechende Anzahl von Ausnehmungen auf. Diese Ausnehmungen sind jeweils einer der Arbeitseinheiten zugeordnet. Die Ausnehmungen bilden bei dieser Ausgestaltung gewissermaßen Tiefziehbereiche, mit denen die Tiefziehfolie, die in dem Folienträger gelagert ist, über ein jeweiliges Kiefermodell tiefgezogen wird. Die Ausnehmungen können beispielsweise jeweils die Form einer Kreisscheibe aufweisen. Die beschriebene Ausgestaltung hat den Vorteil, dass nicht jede der Arbeitseinheiten mit einem separaten Folienträger zusammenwirken muss, um die jeweilige Arbeitseinheit mit einer Tiefziehfolie zu beschicken. Stattdessen wird ein auf die Anzahl der Arbeitseinheiten abgestimmt dimensionierter Folienträger vorgesehen, der im einfachsten Fall mit einer einzigen Tiefziehfolie bestückt wird. Damit der Folienträger mit sämtlichen Arbeitseinheiten zusammenwirken kann, erstreckt er sich in der beschriebenen Weise entlang sämtlicher Arbeitseinheiten. Für den Fall, dass die Herstellung einer die Anzahl der Arbeitseinheiten unterschreitenden Anzahl von Abformungen gewünscht ist, ist es bei dieser Ausgestaltung ohne Weiteres möglich, eine Tiefziehfolie zu verwenden, deren Abmessungen die Abmessungen des Folienträgers unterschreitet und mithin den Folienträger nicht vollständig ausnutzt. Somit können beispielsweise Bereiche des Folienträgers, die in dem sich anschließenden Tiefziehvorgang nicht zur Verwendung anstehenden Arbeitseinheiten zugeordnet sind, "unbestückt" bleiben. Der Tiefziehvorgang wird daraufhin nur bei den Arbeitseinheiten durchgeführt, die mit Tiefziehfolie und entsprechend mit Kiefermodellen bestückt sind.

Hierbei ist es besonders vorteilhaft, wenn die Druckformvorrichtung dazu vorgesehen und eingerichtet ist, die Heizeinrichtungen der Arbeitseinheiten in Abhängigkeit davon für den Heizschritt zu aktivieren, ob der Folienträger betreffend die jeweilige Arbeitseinheit mit einer Tiefziehfolie bestückt ist. Hierzu ist es beispielsweise denkbar, dass die Druckformvorrichtung über eine Mehrzahl von Sensoren verfügt, die den Folienträger dahingehend überwachen, in welchen Bereichen oder an welchen Ausnehmungen er mit Tiefziehfolie bestückt ist. Diese Sensoren können mit einer Steuereinrichtung der Druckformvorrichtung wirkverbunden sein, sodass die Steuereinrichtung die mittels der Sensoren erfassten Informationen verarbeiten kann und die Heizeinrichtungen der Arbeitseinheiten dementsprechend ansteuert. Durch diese Ausgestaltung kann die Druckformvorrichtung besonders bedarfsgerecht betrieben werden, wobei Energie für die Erhitzung von Tiefziehfolie nur in solchen Bereichen eingesetzt wird, in denen tatsächlich eine Tiefziehfolie zu erhitzen ist.

Die Druckformvorrichtung weiter ausgestaltend ist der Folienträger in Form einer Schublade ausgebildet, die linear zwischen einer Bestückstellung und einer Heizstellung überführbar ist. In der Bestückstellung ist der Folienträger händisch mit mindestens einer Tiefziehfolie bestückbar. Bevorzugt befindet sich der Folienträger bei Vorliegen in seiner Bestückstellung zumindest teilweise außerhalb des Gehäuses, sodass ein händischer Zugriff auf den Folienträger besonders einfach möglich ist. Bei Vorliegen in der Heizstellung ist der Folienträger derart relativ zu der in ihrer Arbeitsstellung befindlichen Heizeinrichtung angeordnet, dass eine auf dem Folienträger gelagert Tiefziehfolie mittels der Heizeinrichtung erhitzbar ist. Bei Vorliegen in der Heizstellung befindet sich der Folienträger vorzugsweise innerhalb des Gehäuses. Die Ausgestaltung des Folienträgers in Form einer Schublade hat den Vorteil, dass der Folienträger besonders einfach mit einer oder mehreren Tiefziehfolien bestückt werden und daraufhin relativ zu der Heizeinrichtung positioniert werden kann. Im einfachsten Fall ist der Folienträger zu diesem Zweck entlang einer linearen Bewegungsachse beweglich gelagert, wobei diese Bewegungsachse bevorzugt senkrecht zu der Arbeitsachse der Arbeitseinheit orientiert ist. Sofern letztere beispielsweise vertikal orientiert ist, was bevorzugt ist, ist die Bewegungsachse des Folienträgers horizontal orientiert.

In besonders bevorzugter Weise umfasst die Druckformvorrichtung ferner einen Schalter, der derart angeordnet ist, dass er infolge der Überführung des Folienträgers in dessen Heizstellung betätigt wird. Der Schalter ist mit einer Steuereinrichtung der Druckformvorrichtung wirkverbunden, die dazu eingerichtet ist, infolge der Betätigung des Schalters die Heizeinrichtung zu aktivieren. Diese Ausgestaltung hat den besonderen Vorteil, dass der Start des Heizschritts des Tiefziehvorgangs nicht mittels eines gesonderten Handgriffs ausgelöst werden muss, sondern mittels des Schalters automatisch dann ausgelöst wird, wenn der Folienträger in dessen Heizstellung überführt wurde. Letzteres kann besonders einfach händisch oder automatisiert erfolgen.

In einer weiterhin vorteilhaften Ausgestaltung der Druckformvorrichtung ist die Druckeinrichtung der mindestens einen Arbeitseinheit zwischen einem Wartezustand und einem Druckzustand überführbar. Zur Überführung der Druckeinrichtung zwischen diesen beiden Zuständen ist der Druckzylinder der Druckeinrichtung entlang der Arbeitsachse der Arbeitseinheit in Richtung auf den Modellträger zu bewegbar. Der Druckzustand der Druckeinrichtung ist dann erreicht, wenn sich die Druckeinrichtung in Wirkverbindung mit dem Modellträger befindet. Diese Wirkverbindung kann in mittelbarer oder unmittelbarer Weise bestehen und ist dadurch gekennzeichnet, dass der Druckzylinder der Druckeinrichtung dicht mit einer Oberfläche der Tiefziehfolie oder dicht mit einer Oberfläche des Modellträgers abschließt und die Tiefziehfolie überdies an oder auf dem Modellträger aufliegt. In diesem Zustand ist die Möglichkeit gegeben, mittels des Aufbringens eines pneumatischen Drucks, der mittels der Druckeinrichtung bereitgestellt wird, die erhitzte Tiefziehfolie, die infolge ihrer Erhitzung weich und verformbar ist, über das Kiefermodell tiefzuziehen.

Bevorzugt besteht der dichte Abschluss des Druckzylinders infolge eines dichten Anliegens an der Tiefziehfolie. Dies führt dazu, dass die Tiefziehfolie mit dem Druckzylinder einen in dem Druckzylinder befindlichen Druckraum begrenzt, in dem der pneumatische Druck aufgebaut werden kann. Dieser Druck wirkt auf die Oberfläche der Tiefziehfolie und ist infolgedessen geeignet, die Tiefziehfolie über das Kiefermodell zu drücken. Bevorzugt handelt es sich bei dem pneumatischen Druck um einen Überdruck, sodass die Tiefziehfolie über das Kiefermodell gedrückt wird. Dies ist vor allem dann vorteilhaft, wenn sich der Modellträger und die Druckeinrichtung auf gegenüberliegenden Seiten der Tiefziehfolie befinden. Auch ist alternativ die Aufbringung eines Unterdrucks denkbar, um die Tiefziehfolie über das Kiefermodell zu "saugen" bzw. ziehen.

Ferner kann eine solche Ausgestaltung der Druckformvorrichtung vorteilhaft sein, bei der der Druckzylinder der Druckeinrichtung mittels einer Druckleitung mit einem Druckerzeuger verbunden ist. Letzterer ist dazu vorgesehen und eingerichtet, einen pneumatischen Druck zu erzeugen. Beispielsweise kann der Druckerzeuger von einem Kompressor gebildet sein. Da der Druckerzeuger mittels der Druckleitung mit dem Druckzylinder verbunden ist, kann mittels des Druckerzeugers für die Durchführung des Formschritts des Tiefziehvorgangs ein Überdruck oder Unterdruck in dem Druckzylinder erzeugt werden und in der vorstehend beschriebenen Weise mittels des Druckzylinders auf die Tiefziehfolie aufgebracht werden. Auf diese Weise ist ein Tiefziehvorgang besonders einfach durchführbar. Der Druckerzeuger kann auch von einer Vakuumpumpe gebildet sein, falls der Tiefziehvorgang mittels der Aufbringung eines Unterdrucks durchgeführt werden soll.

Besonders vorteilhaft ist dabei eine solche Ausgestaltung, bei der die Druckeinrichtung ferner einen Stellzylinder umfasst, innerhalb dessen der Druckzylinder als Kolben geführt ist. Diese Ausgestaltung ermöglicht einen besonders einfachen Bewegungsmechanismus für den Druckzylinder, mittels dessen die Druckeinrichtung zwischen dem vorstehend beschriebenen Wartezustand und dem Druckzustand überführt werden kann. Insbesondere ist die Möglichkeit geschaffen, den Druckzylinder entlang der Arbeitsachse der Arbeitseinheit zu bewegen. Bei dieser Ausgestaltung begrenzt der Stellzylinder mit dem Druckzylinder einen Druckraum, der mittels einer Druckleitung mit einem Druckerzeuger verbunden ist. Hierbei kann es sich um denselben Druckerzeuger handeln, mittels dessen der Druckzylinder mit pneumatischen Druck versorgt wird. Ebenfalls ist es denkbar, dass es sich um einen weiteren bzw. anderen Druckerzeuger handelt. Mittels des Aufbringens eines pneumatischen Drucks in dem Druckraum des Stellzylinders wird der Druckzylinder, der als Kolben des Stellzylinders fungiert, axial entlang einer Mittelachse des Stellzylinders bewegt. Der Stellzylinder ist entsprechend derart angeordnet, dass seine Mittelachse mit der Arbeitsachse der Arbeitseinheit zusammenfällt.

Bei der beschriebenen Ausgestaltung kann es des Weiteren vorteilhaft sein, wenn die Druckformvorrichtung über mindestens eine Rückstelleinrichtung verfügt, die beispielsweise in Form einer Gasfeder ausgebildet sein kann. Die Rückstelleinrichtung ist dazu vorgesehen und eingerichtet, den Druckzylinder nach seinem Ausfahren aus dem Stellzylinder und nach Abschluss des Formschritts wieder zurück in den Stellzylinder einzufahren. Mit anderen Worten dient die Rückstelleinrichtung dazu, die Druckeinrichtung von ihrem Druckzustand zurück in ihren Wartezustand zu überführen, sobald der pneumatische Druck in dem Druckraum des Stellzylinders abgebaut ist, und anschließend in dem Wartezustand zu halten. Entsprechend ist es bei dieser Ausgestaltung für das Ausfahren des Druckzylinders entlang der Arbeitsachse der Arbeitseinheit erforderlich, dass eine voreingestellte Vorspannkraft der Rückstelleinrichtung überwunden wird. Der Druck in dem Druckraum des Stellzylinders ist betragsmäßig entsprechend einzustellen.

Weiterhin kann eine solche Ausgestaltung besonders vorteilhaft sein, bei der der Folienträger gemeinsam mit dem Druckzylinder bewegbar ist. Dies ist insbesondere bei einer Ausgestaltung der Druckformvorrichtung vorteilhaft, bei der der Folienträger gemäß vorstehender Beschreibung zwischen einer Bestückstellung und einer Heizstellung überführbar ist. Zur Überführung der Druckeinrichtung in deren Druckzustand wird gemäß vorstehender Erläuterung bevorzugt der Druckzylinder entlang der Arbeitsachse der Arbeitseinheit in Richtung auf den Modellträger zu bewegt. Die Bewegbarkeit des Folienträgers gemeinsam mit dem Druckzylinder trägt dazu bei, dass der Modellträger, die Tiefziehfolie und der Druckzylinder in Wirkverbindung miteinander gebracht werden können. Mithin kann der Druckzylinder die zuvor erhitzte Tiefziehfolie "mitnehmen", bis die der Heizeinrichtung bzw. dem Modellträger zugewandte Oberfläche der Tiefziehfolie in Kontakt mit einer Oberfläche des Modellträgers tritt. Infolge eines weiteren Andrückens des Druckzylinders wird sodann eine dichte Verbindung zum einen zwischen dem Druckzylinder und der dem Druckzylinder zugewandten Oberfläche der Tiefziehfolie und zum anderen zwischen dem Modellträger und der dem Modellträger zugewandten Oberfläche der Tiefziehfolie erreicht. Sofern dies gegeben ist, kann der Formschritt des Tiefziehvorgangs besonders einfach in der beschriebenen Weise durchgeführt werden, indem nämlich in dem Druckzylinder pneumatischer Druck aufgebaut wird, vorzugsweise ein Überdruck. Hierdurch wird sodann die Tiefziehfolie auf das Kiefermodell gedrückt und letzteres in der Tiefziehfolie in Form eines Negativs abgeformt. Dieser Zustand wird sodann für eine gewisse Zeit ("Abkühlzeit") zum Abkühlen und Erstarren der Tiefziehfolie beibehalten, bevor der Druck abgelassen wird. Der Formschritt ist damit beendet.

Für die Bewegbarkeit des Folienträgers gemeinsam mit dem Druckzylinder kann beispielsweise der Folienträger an dem Druckzylinder lagerbar sein, beispielsweise mittels mindestens eines Magneten. Da die Tiefziehfolie nach der Beendigung des Formschritts an dem Modellträger bzw. einem auf dem Modellträger gelagerten Kiefermodell verbleibt, der Druckzylinder jedoch gleichwohl entlang der Arbeitsachse von dem Modellträger wegbewegt werden muss (die Druckeinrichtung wird zurück in ihren Wartezustand überführt), kann vorgesehen sein, dass der Folienträger vor der Überführung der Druckeinrichtung zurück in deren Wartezustand von dem Druckzylinder entkoppelt wird und mithin im Bereich des Modellträgers verbleibt. Dies kann beispielsweise mittels eines Rastmechanismus erfolgen, infolgedessen die Befestigung des Folienträgers an dem Druckzylinder überwunden wird, sodass der Folienträger und der Druckzylinder voneinander getrennt werden.

Eine solche Ausgestaltung, bei der der Folienträger entlang der Arbeitsachse der Arbeitseinheit bewegbar ist, ermöglicht den unmittelbaren Kontakt einer erhitzten Tiefziehfolie mit dem Modellträger, ohne dabei jedoch die Bewegungseinrichtung zu behindern, mittels der die Heizeinrichtung und der Modellträger wechselweise zwischen ihrer jeweiligen Arbeitsstellung überführbar sind.

Unabhängig von den vorstehend als vorteilhaft beschriebenen Ausgestaltungen kann es grundsätzlich besonders vorteilhaft sein, wenn die Druckformvorrichtung eine Steuereinrichtung umfasst, die dazu vorgesehen und eingerichtet ist, die Heizeinrichtung und/oder die Druckeinrichtung der mindestens einen Arbeitseinheit zur Durchführung eines Tiefziehvorgangs anzusteuern. Mittels einer solchen Steuereinrichtung kann ein Tiefziehvorgang zumindest teilweise, vorzugsweise vollständig, automatisiert werden. Beispielsweise ist es denkbar, mittels der Steuereinrichtung eine Heizzeit, über die hinweg mittels der Heizeinrichtung während des Heizschritts die jeweilige Tiefziehfolie erhitzt wird, in Abhängigkeit davon automatisch einzustellen, welche Art von Tiefziehfolie verwendet wird. Um die Tiefziehfolie zu identifizieren, kann eine händische Eingabe eines Benutzers der Druckformvorrichtung erfolgen. Ebenfalls ist es denkbar, dass die Druckformvorrichtung mit einem Scanner ausgestattet ist, mittels dessen eine Codierung, beispielsweise ein Strichcode oder ein QR-Code, einer Tiefziehfolie erfassbar ist. Der Scanner ist mit der Steuereinrichtung wirkverbunden, sodass letztere die mittels des Scanners erfassten Informationen verarbeiten und in Abhängigkeit davon die Heizeinrichtung ansteuern kann.

Die Anordnung einer solchen Steuereinrichtung kann insbesondere bei einer solchen Druckformvorrichtung vorteilhaft sein, die über eine Mehrzahl von Arbeitseinheiten gemäß vorstehender Beschreibung verfügt. Hierbei ist die Steuereinrichtung dazu vorgesehen und eingerichtet, die Heizeinrichtungen der Arbeitseinheiten jeweils nur dann automatisch zur Durchführung des Heizschritts des Tiefziehvorgangs zu aktivieren, wenn der Folienträger für die jeweilige Arbeitseinheit mit einer Tiefziehfolie bestückt ist. Die sich hierdurch ergebenden Vorteile sind vorstehend bereits dargelegt. Insbesondere ist ein besonders bedarfsgerechter Betrieb der Druckformvorrichtung möglich, bei der lediglich diejenigen Heizeinrichtungen elektrischen Strom verbrauchen, die zur Erhitzung einer Tiefziehfolie im Einzelfall benötigt werden.

Die zugrunde liegende Aufgabe wird ferner in verfahrenstechnischer Hinsicht mittels eines Verfahrens mit den Merkmalen des Anspruchs 11 gelöst. Vorteilhafte Ausgestaltungen ergeben sich aus den zugehörigen Unteransprüchen.

Das erfindungsgemäße Verfahren ist dadurch gekennzeichnet, dass nach dem Abschluss des Heizschritts und vor Durchführung des Formschritts die Heizeinrichtung mittels einer Bewegungseinrichtung aus ihrer Arbeitsstellung wegbewegt und der Modellträger mittels der Bewegungseinrichtung in seine Arbeitsstellung bewegt werden. Gemäß vorstehender Beschreibung sind sowohl die Heizeinrichtung als auch der Modellträger jeweils bei Vorliegen in ihrer Arbeitsstellung entlang beziehungsweise auf der Arbeitsachse der mindestens einen Arbeitseinheit angeordnet. Mit anderen Worten vertauschen die Heizeinrichtung und der Modellträger der Arbeitseinheit nach der Beendigung des Heizschritts ihre Plätze, sodass der Modellträger mitsamt einem darauf gelagerten Kiefermodell zur Durchführung des Formschritts des Tiefziehvorgangs positioniert ist. Hierbei sind sowohl die Heizeinrichtung als auch Modellträger auf derselben Seite der Tiefziehfolie angeordnet. Vorzugsweise ist diese Seite die der Druckeinrichtung abgewandte Seite der Tiefziehfolie.

Das erfindungsgemäße Verfahren ist mittels der erfindungsgemäßen Druckformvorrichtung besonders einfach durchführbar. Die sich hierdurch ergebenden Vorteile sind vorstehend bereits dargelegt.

In einer vorteilhaften Ausgestaltung des Verfahrens führt die Bewegungseinrichtung die Bewegung der Heizeinrichtung weg aus deren Arbeitsstellung und die Bewegung des Modellträgers in dessen Arbeitsstellung in Form einer gemeinsamen Bewegung durch. Mit anderen Worten werden die Heizeinrichtung und der Modellträger nicht jeweils einzeln, sondern gemeinsam bewegt. Eine solche gemeinsame Bewegung ist besonders einfach durchführbar, wenn die Bewegungseinrichtung gemäß vorstehender Beschreibung von einer Schublade gebildet ist, auf der sowohl die Heizeinrichtung als auch der Modellträger angeordnet sind. Bei dieser Ausgestaltung muss lediglich die Schublade, beispielsweise händisch, bewegt werden, um in einer gemeinsamen Bewegung sowohl die Heizeinrichtung als auch den Modellträger zu bewegen.

Eine weitere Zeitersparnis kann erreicht werden, indem das Aufheizen der Tiefziehfolie vorzugsweise zeitgleich mit dem Bestücken des Modellträgers erfolgt.

Das Verfahren kann ferner dann besonders vorteilhaft sein, wenn die Heizeinrichtung der Arbeitseinheit automatisch aktiviert wird, sobald der Folienträger mitsamt der darauf gelagerten Tiefziehfolie in eine Heizstellung überführt wird. Die Heizstellung ist dadurch gekennzeichnet, dass sie dazu vorgesehen und eingerichtet ist, dass die Tiefziehfolie bestimmungsgemäß mittels der Heizeinrichtung erhitzt wird, um nach dem Erhitzen den Formschritt des Tiefziehvorgangs durchzuführen. Die automatische Aktivierung der Heizeinrichtung bei Überführung des Folienträgers in die Heizstellung hat den Vorteil, dass eine händische Bedienung, die denselben Effekt hat, entfallen kann. Hierdurch ist das Verfahren besonders zeitsparend und einfach durchführbar. Die automatische Aktivierung der Heizeinrichtung kann insbesondere mittels eines vorstehend beschriebenen Schalters erfolgen, der infolge der Überführung des Folienträgers in dessen Heizstellung auslöst.

Weiterhin kann das Verfahren dann besonders von Vorteil sein, wenn die Druckformvorrichtung eine Mehrzahl von Arbeitseinheiten umfasst, die jeweils eine Druckeinrichtung, eine Heizeinrichtung und einen Modellträger umfassen, wobei zur Durchführung des Heizschritts nur diejenigen Heizeinrichtungen aktiviert werden, denen zugeordnet der Folienträger mit einer Tiefziehfolie bestückt ist. Die sich hierdurch ergebenden Vorteile sind vorstehend bereits dargelegt. Insbesondere muss Energie für das Erhitzen von Tiefziehfolie nur bei solchen Heizeinrichtungen aufgewendet werden, die in dem jeweiligen Heizschritt für die Erhitzung einer Tiefziehfolie tatsächlich vorgesehen sind.

Des Weiteren kann eine solche Ausgestaltung des Verfahrens besonders vorteilhaft sein, bei der die Druckeinrichtung zur Durchführung des Formschritts infolge Ansteuerung durch eine Steuereinrichtung automatisch ausgehend von ihrem Wartezustand in ihren Druckzustand überführt wird. Hierzu wird ein Druckzylinder der Druckeinrichtung relativ auf den Modellträger zu bewegt und nach mittelbarem oder unmittelbarem Eingriff mit dem Modellträger automatisch ein pneumatischer Druck in einem Druckraum des Druckzylinders aufgebaut. Dieser Druck wird entsprechend auf die Tiefziehfolie ausgeübt, sodass die Tiefziehfolie über das jeweilige Kiefermodell, das auf dem Modellträger gelagert ist, tiefgezogen wird. Der Druck, der in dem Druckzylinder aufgebaut wird, kann insbesondere von einem Überdruck gebildet sein. Grundsätzlich ist es auch denkbar, dass in dem Druckzylinder bzw. dessen Druckraum ein Unterdruck aufgebaut wird, mittels dessen der Formschritt vorgenommen wird. Bevorzugt kann der Druckzylinder zum Zweck seiner Bewegung von seinem Wartezustand in seinen Druckzustand angetrieben werden, beispielsweise pneumatisch. Dies ist vorstehend bereits für die Druckformvorrichtung dargelegt.

Das beschriebene Verfahren hat den besonderen Vorteil, dass ein jeweiliger Tiefziehvorgang zum einen weitgehend ohne händischen Eingriff eines Benutzers der Druckformvorrichtung durchgeführt werden kann. Hierdurch ist die Durchführung des Verfahrens besonders einfach. Zum anderen sind bei Anwendung dieser Verfahrensweise Fehlerquellen ausgeschlossen, die sich infolge einer händischen Bedienung ergeben können. Eine solche Fehlerquelle kann beispielsweise darin bestehen, dass nach Beendigung des Heizschritts zu lange damit gewartet wird, den Formschritt zu starten, wodurch die Temperatur der Tiefziehfolie sinkt und ihre Eignung für den Formschritt abnimmt. Die Automatisierung führt dazu, dass der Formschritt hingegen zeitlich abgestimmt auf den Heizschritt gestartet werden kann, sodass sich die jeweilige Tiefziehfolie in einem möglichst idealen Zustand für das Tiefziehen über ein jeweiliges Kiefermodell befindet.

Die automatische Durchführung des Formschritts ist besonders einfach umsetzbar, wenn die Druckeinrichtung gemäß vorstehender Erläuterung zusätzlich zu dem Druckzylinder einen Stellzylinder umfasst. Bei dieser Ausgestaltung kann die Bewegung des Druckzylinders mittels entsprechender Ansteuerung von Ventilen besonders einfach automatisch mittels einer Steuereinrichtung ausgelöst werden, sodass sich in dem Druckraum des Stellzylinders ein Druck einstellt, infolgedessen der Druckzylinder entlang der Arbeitsachse in Richtung auf den Modellträger zu bewegt wird, bis er sich in seiner Druckstellung befindet und der Formschritt beginnen kann.

Schließlich kann eine solche Ausgestaltung des Verfahrens besonders vorteilhaft sein, bei der der pneumatische Druck der Druckeinrichtung nach einer Abkühlzeit infolge Ansteuerung durch eine Steuereinrichtung automatisch abgelassen und die Druckeinrichtung automatisch zurück in ihren Wartezustand überführt wird. Hierdurch wird der Formschritt des Tiefziehvorgangs beendet. Das automatische Ablassen des Drucks kann beispielsweise mittels einer Ansteuerung von Ventilen erfolgen. Eine daraufhin erfolgende Überführung der Druckeinrichtung zurück in ihren Wartezustand kann besonders einfach mittels mindestens einer Rückstelleinrichtung gemäß vorstehender Erläuterung erfolgen. Die automatische Beendigung des Formschritts in der beschriebenen Weise hat ebenfalls den Vorteil, etwaige Fehler in der Bedienung der Druckformvorrichtung zu vermeiden. Insbesondere wird ausgeschlossen, dass versehentlich der Druck der Druckeinrichtung verfrüht abgelassen wird, während die Temperatur der Tiefziehfolie noch nicht ausreichend abgesunken ist. Dies könnte eine ungewollte nachträgliche Verformung der Tiefziehfolie zur Folge haben, sodass als Ergebnis die Abformung des jeweiligen Kiefermodells nicht in gewünschter Qualität erfolgt. Die Überwachung einer angemessenen Abkühlzeit mittels einer Steuereinrichtung und eine nach Ablauf der Abkühlzeit automatisierte Freigabe der Druckeinrichtung ist entsprechend zu bevorzugen.

### Ausführungsbeispiele

Die Erfindung ist nachstehend anhand eines Ausführungsbeispiels, das in den Figuren dargestellt ist, näher erläutert. Es zeigt:
- Fig. 1:: Eine perspektivische Ansicht einer erfindungsgemäßen Druckformvorrichtung,
- Fig. 2:: Ein vertikaler Querschnitt durch die Druckformvorrichtung gemäß Figur 1,
- Fig. 3:: Der Querschnitt gemäß Figur 2 während eines Heizschritts eines mittels der Druckformvorrichtung durchgeführten Tiefziehvorgangs,
- Fig. 4:: Der Querschnitt gemäß Figur 2 während eines Zwischenschritts zwischen dem Heizschritt gemäß Figur 3 und einem folgenden Formschritt des Tiefziehvorgangs,
- Fig. 5:: Der Querschnitt gemäß Figur 2 während des Formschritts des Tiefziehvorgangs,
- Fig. 6:: Ein horizontaler Querschnitt durch die Druckformvorrichtung gemäß Figur 1.

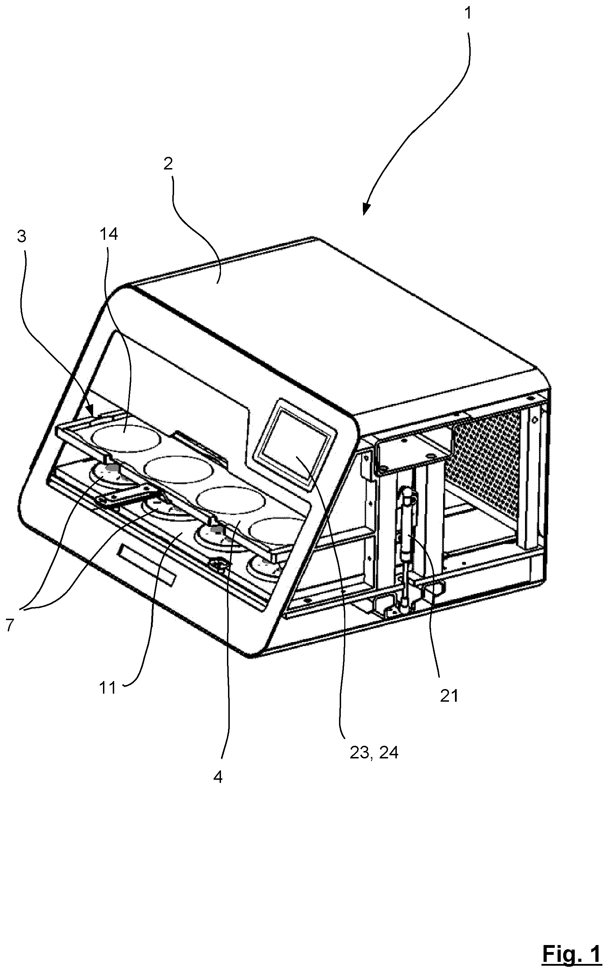

Ein Ausführungsbeispiel, das in den **Figuren 1 bis 6** gezeigt ist, umfasst eine erfindungsgemäße Druckformvorrichtung 1, die zum Einsatz in der dentalen Tiefziehtechnik ausgebildet ist. Mithin ist die Druckformvorrichtung 1 dazu vorgesehen und eingerichtet, aktive kieferorthopädische Behandlungselemente herzustellen. Diese werden dadurch hergestellt, dass eine Tiefziehfolie über ein zuvor hergestelltes Kiefermodell, das ein positiv von Zähnen eines Patienten darstellt, tiefgezogen wird. Nach dem Tiefziehen wird die Tiefziehfolie bearbeitet, sodass sich eine sogenannte "Zahnschiene" ergibt, die in der Technik üblicherweise als "Aligner" bezeichnet wird.

Die Druckformvorrichtung 1 umfasst ein Gehäuse 2, in dem hier insgesamt vier Arbeitseinheiten 5 angeordnet sind. Die Arbeitseinheiten 5 sind entlang einer Querachse 26 der Druckformvorrichtung 1 betrachtet nebeneinander in Reihe angeordnet. Jede der Arbeitseinheiten 5 umfasst eine Heizeinrichtung 6, einen Modellträger 7 sowie eine Druckeinrichtung 9. Die Heizeinrichtungen 6 sind dazu vorgesehen und eingerichtet, eine Tiefziehfolie 4 zu erhitzen, sodass diese dazu geeignet ist, über ein jeweiliges Kiefermodell 8 tiefgezogen zu werden. In dem gezeigten Beispiel sind die Heizeinrichtungen 6 jeweils von einem an sich bekannten Wärmestrahler gebildet.

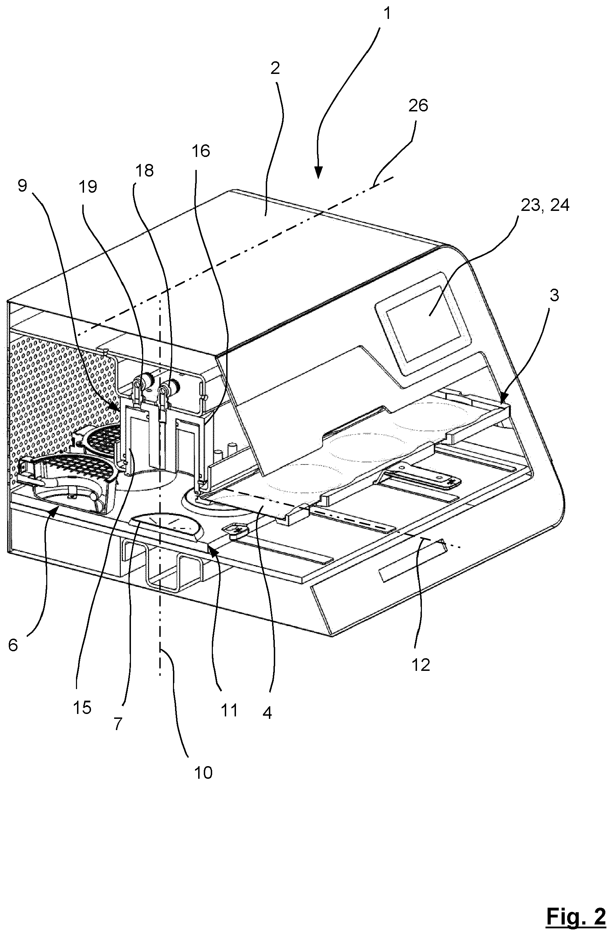

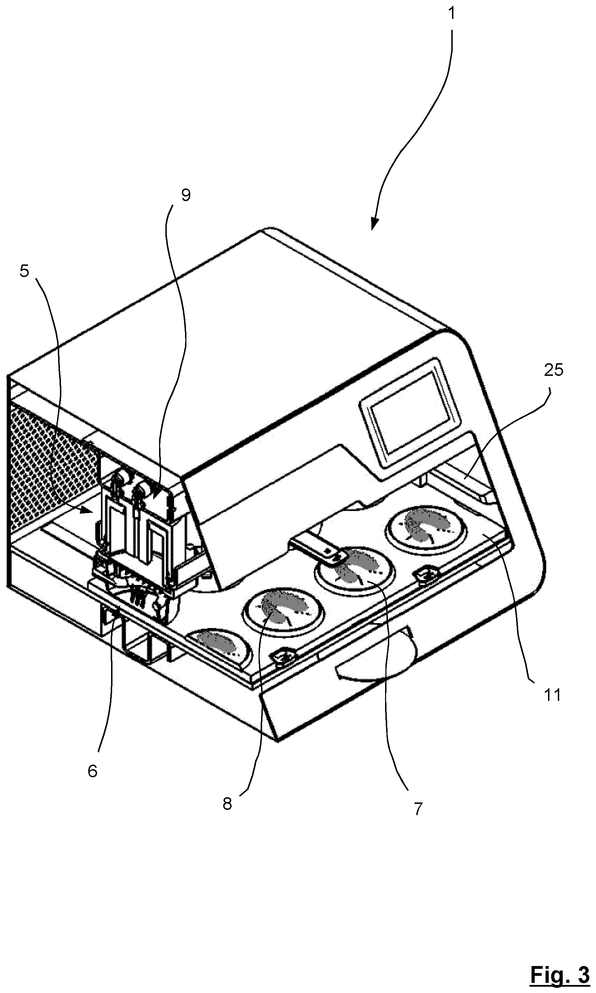

Die Tiefziehfolie 4, die in einem jeweiligen Tiefziehvorgang verarbeitet wird, ist mittels eines Folienträgers 3 der Druckformvorrichtung 1 gelagert. Der Folienträger 3 ergibt sich besonders gut anhand der **Figuren 1** **und** **2****.** Er ist in dem gezeigten Beispiel in Form einer Schublade ausgebildet, die entlang einer in den Figuren nicht eingezeichneten Bewegungsachse zwischen einer Bestückstellung, die in **Figur 2** gezeigt ist, und einer Heizstellung, die in **Figur** 3 gezeigt ist, bewegbar ist. In der Bestückstellung, bei deren Vorliegen sich der Folienträger 3 teilweise außerhalb des Gehäuses 2 befindet, ist der Folienträger 3 besonders einfach mittels einer Tiefziehfolie 4 bestückbar. Dies kann insbesondere mittels händischen Einlegens einer jeweiligen Tiefziehfolie 4 in den Folienträger 3 erfolgen. Bei Vorliegen in der Bestückstellung ist der Folienträger 3 mittels seitlichen Trägerführungen 25, die an dem Gehäuse 2 angeordnet sind, gelagert. Zur Überführung des Folienträgers 3 von der Bestückstellung in die Heizstellung kann selbiger auf den Trägerführungen 25 entlang der Bewegungsachse in das Gehäuse 2 eingeschoben werden. Die Bewegungsachse ist hier horizontal orientiert, das heißt der Folienträger 3 wird im Zuge der Überführung in seine Heizstellung in horizontale Richtung in das Gehäuse 2 eingeschoben.

Der Folienträger 3 ist in dem gezeigten Beispiel in Breitenrichtung der Druckformvorrichtung 1 langgestreckt ausgebildet, wobei er sich entlang sämtlicher Arbeitseinheiten 5 erstreckt. Auf diese Weise ist der Folienträger 3 dazu geeignet, eine rechteckige Tiefziehfolie 4 aufzunehmen, die sich ebenfalls entlang sämtlicher Arbeitseinheiten 5 erstreckt. Wie sich besonders gut anhand von **Figur 1** ergibt, weist der Folienträger 3 eine der Anzahl der Arbeitseinheiten 5 entsprechende Anzahl von Ausnehmungen 14 auf, wobei jede der Ausnehmungen 14 einer der Arbeitseinheiten 5 zugeordnet ist. Entsprechend sind die Heizeinrichtungen 6 dazu geeignet, die Tiefziehfolie 4 in den Bereichen der Ausnehmungen 14 zu erhitzen, wobei jede Heizeinrichtung 6 einer anderen Ausnehmung 14 zugeordnet ist. Die Ausnehmungen 14, die hier und vorzugsweise jeweils die Form einer Kreisfläche aufweisen, erlauben es, dass die Tiefziehfolie 4 über ein jeweiliges Kiefermodell 8 tiefgezogen wird. Mithin taucht ein jeweiliges Kiefermodell 8 gewissermaßen durch eine zugeordnete Ausnehmung 14 des Folienträgers 3 hindurch in die Tiefziehfolie 4 ein, sodass sich die Tiefziehfolie 4 über das Kiefermodell 8 legt und auf diese Weise die Abformung des Kiefermodells 8 bewirken kann. Die langgestreckte Ausgestaltung des Folienträgers 3 bietet dabei den Vorteil, dass sämtliche Arbeitseinheiten 5 mit einer einzigen Tiefziehfolie 4 beschickt werden können, sodass der Aufwand, für jede Arbeitseinheit 5 eine separate Tiefziehfolie 4 aufzulegen, entfällt. Für den Fall, dass lediglich ein Teil der Arbeitseinheiten 5 für einen anstehenden Tiefziehvorgang verwendet werden soll, ist es ebenso denkbar, dass eine gegenüber dem Folienträger 3 kleinere Tiefziehfolie 4 auf den Folienträger 3 aufgelegt wird. Hierbei kann es sinnvoll oder je nach Ausgestaltung der Druckformvorrichtung 1 auch erforderlich sein, Ausnehmungen 14 des Folienträgers 3, die nicht von einer Tiefziehfolie 4 überdeckt sind, mit einem in den Figuren nicht dargestellten Platzhalter zu bestücken, um die Arbeitsweise der Druckeinrichtungen 9 der Arbeitseinheiten 5 zu ermöglichen.

Die Druckeinrichtungen 9 sind in dem gezeigten Beispiel zweigeteilt ausgeführt und umfassen entsprechend jeweils einen Stellzylinder 16 und einen Druckzylinder 15. Der Druckzylinder 15 einer jeweiligen Druckeinrichtung 9 ist als Kolben in dem zugehörigen Stellzylinder 16 geführt. Mithin begrenzen der Druckzylinder 15 und der Stellzylinder 16 gemeinsam einen Druckraum 17, der es ermöglicht, den Druckzylinder 15 unter Aufbringung eines pneumatischen Drucks in dem Druckraum 17 relativ zu dem Stellzylinder 16 zu bewegen. Diese Bewegung erfolgt entlang einer Arbeitsachse **10** der jeweiligen Arbeitseinheit **5.** Die Arbeitsachsen **10** der Arbeitseinheiten **5** sind in dem gezeigten Beispiel jeweils vertikal orientiert und sind gemeinsam in einer in den Figuren nicht eingezeichneten Arbeitsebene angeordnet. Die Ausgestaltung der Druckeinrichtung **9** befähigt selbige dazu, die Tiefziehfolie **4** nach Durchführung eines Heizschritts des jeweiligen Tiefziehvorgangs in Richtung auf den Modellträger **7** zu zu bewegen und auf diese Weise einen Kontakt zwischen der Tiefziehfolie **4** und auf den Modellträgern **7** gelagerten Kiefermodellen **8** zu bewirken.

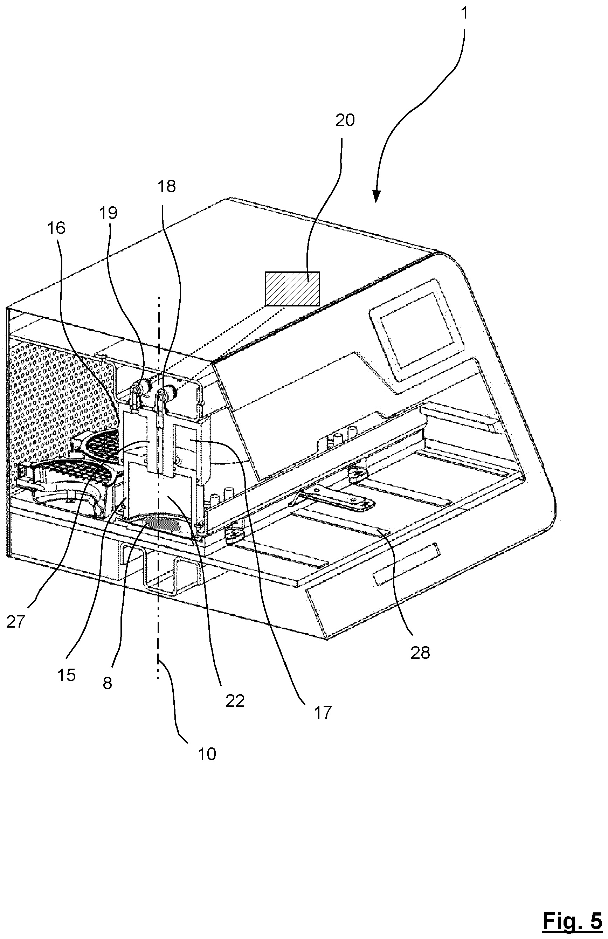

Für die Aufbringung von pneumatischem Druck in dem Arbeitsraum **17** des Stellzylinders **16** ist der Arbeitsraum **17** mittels einer Druckleitung **19** mit einem Druckerzeuger **20** wirkverbunden. Letzterer ist in **Figur 5** lediglich schematisch dargestellt. Der Druckerzeuger **20** kann beispielsweise von einem Kompressor gebildet sein, mittels dessen Druckluft bereitgestellt werden kann. Um einen in dem Druckraum **17** aufgebauten Druck ablassen und den Druckzylinder **15** nach seinem Ausfahren aus dem Stellzylinder **16** wieder einfahren zu können, weist die Druckeinrichtung **9** ein in den Figuren nicht dargestelltes Ventil auf. Für die Durchführung des Formschritts ist vorgesehen, in einem Druckraum **22** des Druckzylinders **15** einen pneumatischen Überdruck aufzubauen. Dieser bewirkt, dass die zuvor erhitzte Tiefziehfolie 4 über ein jeweiliges Kiefermodell 8 gedrückt wird und sich dabei in der gewünschten Weise passgenau an das Kiefermodell 8 anlegt, um letzteres abzuformen. Zu diesem Zweck ist auch der Druckraum **22** über eine Druckleitung **18** mit dem Druckerzeuger **20** wirkverbunden. Die Zuleitung der mittels des Druckerzeugers **20** komprimierten Luft in den Druckraum **22** des Druckzylinders **15** erfolgt zumindest entlang eines Teils der Strecke mittels eines sich entlang der Arbeitsachse **10** erstreckenden Schafts **27** des Stellzylinders **16,** der mit einer axialen Bohrung versehen ist. Letztere mündet in den Druckraum **22,** wie sich besonders gut anhand von **Figur 5** ergibt.

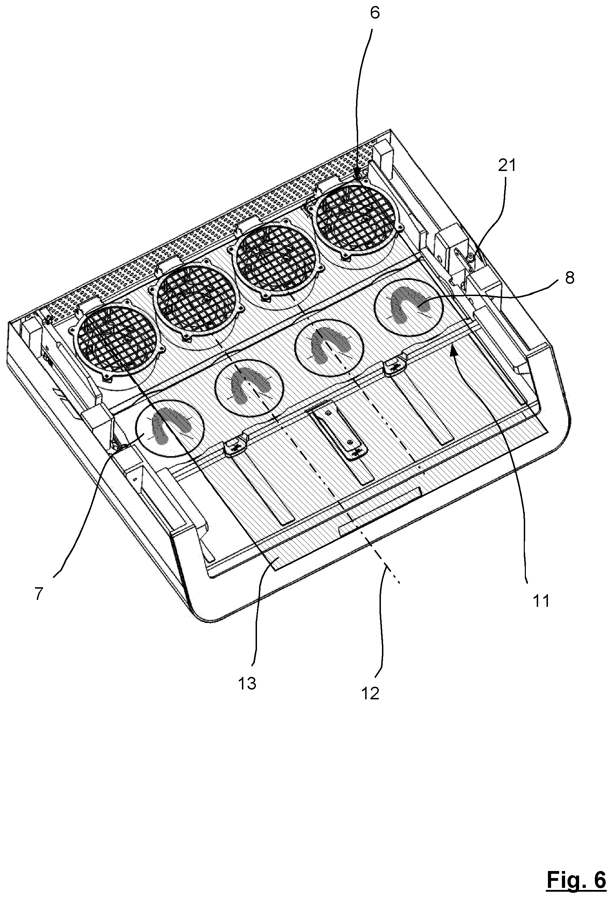

Die Heizeinrichtung 6 und der Modellträger 7 einer jeweiligen Arbeitseinheit 5 sind gemeinsam mittels einer Bewegungseinrichtung **11** in bzw. an dem Gehäuse 2 gelagert. Die Bewegungseinrichtung **11** ist in dem gezeigten Beispiel von einer Schublade gebildet, die mittels Schienen 28 entlang einer Bewegungsachse 12 linear beweglich ist. Die Bewegung der Bewegungseinrichtung **11** erfolgt hierbei innerhalb oder parallel zu einer Wirkebene **13,** die sich besonders gut anhand von **Figur 6** ergibt. Besagte Wirkebene **13** ist in dem gezeigten Beispiel senkrecht zu jeder der Arbeitsachsen 10 der Arbeitseinheiten 5 und mithin horizontal orientiert. Folglich ist die Bewegungseinrichtung **11** dazu eingerichtet, die Heizeinrichtungen 6 und die Modellträger 7 in eine Richtung senkrecht zu den Arbeitsachsen 10 zu bewegen. Auf diese Weise können die Heizeinrichtungen 6 und die Modellträger 7 wechselweise jeweils ihre Arbeitsstellungen einnehmen, in denen sie entlang beziehungsweise auf der jeweiligen Arbeitsachse 10 der zugehörigen Arbeitseinheit 5 angeordnet sind. In dem in **Figur 2** dargestellten Zustand sind beispielsweise die Modellträger 7 jeweils in ihrer Arbeitsstellung befindlich, da sie sich entlang beziehungsweise auf den Arbeitsachsen **10** befinden. Umgekehrt ist beispielsweise in **Figur** 3 gezeigt, dass sich die Heizeinrichtungen 6 in ihrer jeweiligen Arbeitsstellung befinden. Da die Heizeinrichtungen 6 und die Modellträger 7 gemeinsam auf der Bewegungseinrichtung **11** angeordnet sind, erfolgt die wechselweise Überführungen in die jeweilige Arbeitsstellung in Form einer gemeinsamen Bewegung.

In dem gezeigten Beispiel sind die einzelnen Bauteile der Druckformvorrichtung 1 derart relativ zueinander angeordnet, dass die Druckeinrichtungen 9 oberhalb des Folienträgers 3 bzw. einer darin gelagerten Tiefziehfolie 4 gelagert sind und letztere wiederum oberhalb der Bewegungseinrichtung **11** mit den Heizeinrichtungen 6 und den Modellträger 7 angeordnet ist. Entsprechend befinden sich die Heizeinrichtungen 6 und die Modellträger 7 gemeinsam auf einer gemeinsamen Seite der Tiefziehfolie 4, die in dem gezeigten Beispiel eine Unterseite der Tiefziehfolie **4** darstellt. Die Druckeinrichtungen **9** sind demgegenüber einer Oberseite der Tiefziehfolie **4** zugeordnet, sodass sich die Druckeinrichtungen **9** zum einen und die Heizeinrichtungen **6** sowie die Modellträger **7** zum anderen einander gegenüberliegenden Seiten der Tiefziehfolie **4** zugeordnet sind.

Die Druckformvorrichtung **1** verfügt des Weiteren über eine Steuereinrichtung **23,** die mit einem Bedienpaneel **24** zusammenwirkt. Letzteres ist in dem gezeigten Beispiel von einer kombinierten Eingabe-/Anzeigeeinrichtung in Form eines Touchdisplays gebildet, über die sowohl Informationen einem Benutzer der Druckformvorrichtung 1 angezeigt als auch Informationen von einem Benutzer eingegeben werden können. Die Steuereinrichtung **23** ist dazu vorgesehen und eingerichtet, zumindest die Druckeinrichtungen 9 und die Heizeinrichtungen 6 anzusteuern. Auf diese Weise ist ein Tiefziehvorgang gemäß folgendem Ablauf durchführbar:

Vor der Durchführung eines Tiefziehvorgangs befindet sich der Folienträger **3** in seiner Bestückstellung. Die Bewegungseinrichtung **11** befindet sich zudem in einer solchen Stellung, dass die Heizeinrichtungen **6** sich jeweils in ihrer Arbeitsstellung entlang bzw. auf den Arbeitsachsen **10** der Arbeitseinheiten **5** befinden. Entsprechend ragen die Modellträger **7** an einem vorderen Ende des Gehäuses **2** aus selbigem hervor, sodass sie jeweils händisch mit einem Kiefermodell **8** bestückt werden können. Hierzu wird auf jeden der Modellträger **7** ein Kiefermodell **8** gelegt. Die Modellträger **7** sind hier jeweils zur Aufnahme eines einzigen Kiefermodells **8** vorgesehen und kreisförmig ausgebildet, wobei die jeweiligen Kiefermodelle **8** möglichst mittig auf einen zugehörigen Modellträger **7** gelegt werden. Dieser Zustand der Druckformvorrichtung 1 ist in **Figur 1** dargestellt.

Der Folienträger **3** wird mit einer Tiefziehfolie **4** bestückt. In diesem Beispiel sollen alle Arbeitseinheiten **5** jeweils für die Durchführung eines Tiefziehvorgangs verwendet werden. Entsprechend ist die Tiefziehfolie **4** derart dimensioniert, dass sie den Folienträger **3** vollständig belegt. Folglich ist allen vier Ausnehmungen **14** des Folienträgers 3 Tiefziehfolie **4** zugeordnet.

Nach dem Einlegen der Tiefziehfolie **4** wird der Folienträger **3** händisch in seine Heizstellung überführt, indem er in horizontale Richtung in das Gehäuse **2** eingeschoben wird. Bei Vorliegen in dieser Heizstellung befindet sich der Folienträger **3** unterhalb der Druckeinrichtungen **9** sowie oberhalb den in ihrer Arbeitsstellung befindlichen Heizeinrichtungen **6.** Bezogen auf eine der Arbeitseinheiten **5** sind mithin die Druckeinrichtung **9,** die Tiefziehfolie **4** und die Heizeinrichtung **6** gemeinsam entlang bzw. auf der Arbeitsachse **10** der jeweiligen Arbeitseinheit **5** angeordnet, und zwar in Reihe. Dies ist in **Figur 3** veranschaulicht. In dem gezeigten Beispiel ist die Druckformvorrichtung **1** mit einem in den Figuren nicht dargestellten Schalter ausgestattet, der infolge der Überführung des Folienträgers **3** in die Heizstellung auslöst. Der Schalter ist mit der Steuereinrichtung **23** wirkverbunden, sodass diese infolge der Auslösung des Schalters automatisch die Heizeinrichtungen **6** aktiviert. Für die Aktivierung der Heizeinrichtungen **6** werden in dem gezeigten Beispiel zudem Informationen von ebenfalls in den Figuren nicht dargestellten Sensoren berücksichtigt, die eine Belegung des Folienträgers **3** für eine jeweilige Arbeitseinheit **5** mit Tiefziehfolie **4** überwachen. Sofern an einer Ausnehmung **14** des Folienträgers **3** keine Tiefziehfolie **4** vorhanden ist, wird dies bei der Aktivierung der Heizeinrichtungen 6 dahingehend berücksichtigt, dass die der jeweiligen Arbeitseinheit **5** zugeordnete Heizeinrichtung **6** nicht aktiviert wird. Da in dem gezeigten Beispiel sämtliche Arbeitseinheiten **5** mit Tiefziehfolie **4** beschickt werden, werden für den Tiefziehvorgang sämtliche Heizeinrichtungen **6** aktiviert. Dies markiert den Beginn des Heizschritts des Tiefziehvorgangs.

Die Dauer des Heizschritts ("Heizzeit") ist davon abhängig, welche Tiefziehfolie **4** verwendet wird, insbesondere, welche Dicke die jeweilige Tiefziehfolie **4** aufweist und/oder von welchem Material sie gebildet ist. Die Druckformvorrichtung **1** kann beispielsweise mit einem Scanner ausgestattet sein, mittels dessen die Tiefziehfolie **4** des jeweils folgenden Tiefziehvorgangs identifizierbar ist. Dies kann beispielsweise in Form einer Codierung auf der Tiefziehfolie **4** vorgegeben sein, wobei diese Codierung mittels des Scanners optisch erfassbar ist. Die Steuereinrichtung **23** ist dazu eingerichtet, in Abhängigkeit von der jeweiligen Tiefziehfolie **4** die Heizeinrichtungen **6** zu steuern bzw. die Heizzeit einzustellen. Ebenfalls ist es denkbar, dass über das Bedienpaneel **24** händische Eingaben getätigt werden, die den Betrieb der Heizeinrichtungen **6** betreffen. Dies kann sowohl eine Temperatur der Heizeinrichtungen **6** als auch die Heizzeit betreffen. Während des Heizschritts wird die Tiefziehfolie **4** an ihrer den Druckeinrichtungen **9** abgewandten Seite mittels der Heizeinrichtungen **6** erhitzt. Es ist denkbar, dass die Druckformvorrichtung **1** über einen oder mehrere Temperatursensoren verfügt, mittels derer eine Temperatur der Tiefziehfolie **4** von ihrer Unterseite her im Bereich der Ausnehmungen **14** des Folienträgers **3** erfassbar ist. Hierdurch kann eine Kontrolle erfolgen, ob die Tiefziehfolie 4 ausreichend erhitzt wurde und der Heizschritt beendet werden kann.

Während des Heizschritts kann der Modellträger **7** mit Kiefermodellen **8** bestückt werden, insbesondere händisch von einem Benutzer der Druckformvorrichtung **1.**

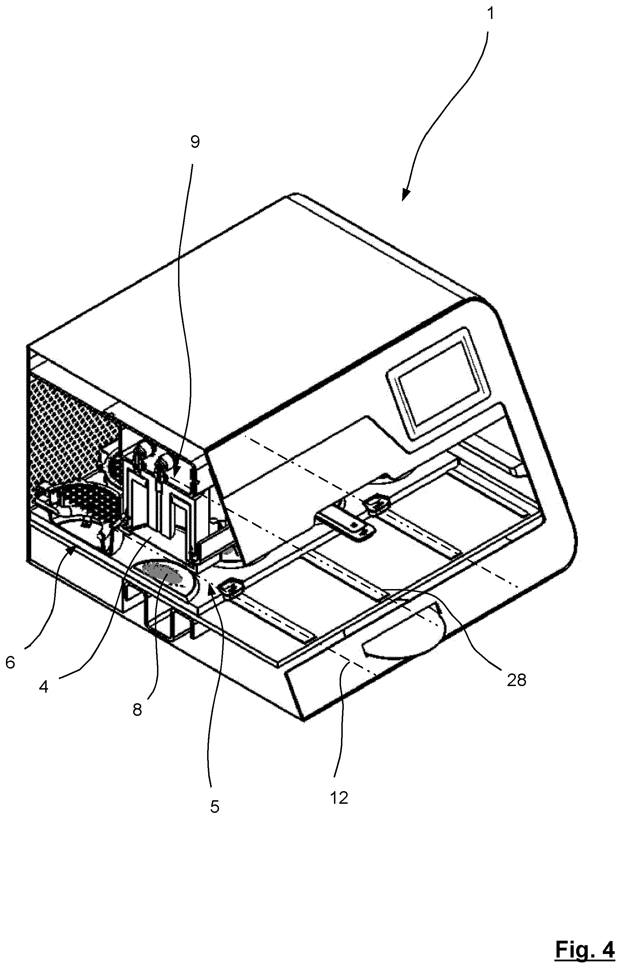

Nach der Beendigung des Heizschritts werden die Heizeinrichtungen **6** aus ihrer jeweiligen Arbeitsstellung entlang beziehungsweise von den Arbeitsachsen **10** der Arbeitseinheiten **5** wegbewegt und stattdessen die Modellträger **7** in ihre jeweilige Arbeitsstellung überführt. Die Modellträger **7** nehmen folglich den Platz ein, den zuvor die Heizeinrichtungen **6** hatten. Dies geschieht gemäß vorstehender Beschreibung mittels der Bewegungseinrichtung **11,** die in Richtung der Bewegungsachse **12** händisch bewegt wird. Die Bewegung der Bewegungseinrichtung **11** in der beschriebenen Weise markiert einen Zwischenschritt, der sich an den Heizschritt anschließt und vor dem Formschritt durchgeführt wird. Nach der Durchführung des Zwischenschritts befindet sich die Druckformvorrichtung **1** in dem in **Figur 4** dargestellten Zustand. In diesem Zustand sind bezogen auf eine Arbeitseinheit **5** die Druckeinrichtung **9,** die Tiefziehfolie **4** und der Modellträger **7** gemeinsam entlang bzw. auf der Arbeitsachse **10 der** jeweiligen Arbeitseinheit **5** angeordnet, und zwar in Reihe.

Sobald die Modellträger **7** sich in ihren Arbeitsstellungen befinden, wird im Rahmen eines weiteren Zwischenschritts der Formschritt vorbereitet. Hierzu werden - ausgehend von einem Wartezustand der Druckeinrichtungen **9** - die Druckzylinder **15** der Druckeinrichtungen **9** entlang der Arbeitsachsen **10** ausgefahren, bis sie in mittelbare oder unmittelbare Wirkverbindung mit dem jeweilig zugehörigen Modellträger **7** treten. In dem gezeigten Beispiel werden folglich die Druckzylinder **15** mittels der Stellzylinder **16** vertikal entlang der Arbeitsachsen **10** abwärts bewegt. Diese Bewegung erfolgt zusammen mit dem Folienträger **3** sowie der darin gelagerten (nunmehr erhitzten) Tiefziehfolie **4.** Um dies zu erreichen, ist der Folienträger **3** bei Vorliegen in seiner Heizstellung in dem gezeigten Beispiel an zumindest einem Teil der Druckzylinder **15** der Druckeinrichtungen **9** gelagert. Dies erfolgt in dem gezeigten Beispiel mittels in den Figuren nicht dargestellter Magnete. Diese haben den Folienträger **3** von den Trägerführungen **25** übernommen, als der Folienträger **3** von seiner Bestückstellung in seine Heizstellung überführt wurde. Die Magnete dienen dazu, den Folienträger **3** in der Heizstellung an den Druckzylindern **15** zu arretieren. Die Lagerung des Folienträgers 3 an den Druckzylindern **15** hat den Vorteil, dass der Folienträger **3** den Bewegungen der Druckzylinder **15** entlang den Arbeitsachsen **10** folgt. Mit anderen Worten werden die Druckzylinder **15** und der Folienträger im Zuge der Überführung der Druckeinrichtungen **9** von deren jeweiligem Wartezustand in deren jeweiligen Druckzustand gemeinsam bewegt.

Nach alldem werden vor der Durchführung des Formschritts die Druckräume **17** der Stellzylinder **16** der Druckeinrichtungen **9** über den Druckerzeuger **20** mit pneumatischem Druck beaufschlagt, wodurch die Druckzylinder **15** ausgefahren werden. Sie bewegen sich mithin entlang der jeweiligen Arbeitsachse **10** in vertikale Richtung auf den jeweils zugehörigen Modellträger **7** zu. Diese Bewegung erfolgt so weit, bis die Tiefziehfolie **4** mit einer ihr zugewandten Oberfläche des jeweiligen Modellträgers **7** in Kontakt tritt. Ein weiteres Ausfahren der Druckzylinder **15** führt sodann zu einem Anpressen der Tiefziehfolie **4** an dem Modellträger **7** sowie zu einem Anpressen einer umlaufenden axialen Dichtung des jeweiligen Druckzylinders **15** an der Tiefziehfolie **4.** Der Druckzylinder **15** bzw. die Druckeinrichtung **9** befindet sich damit in dem gezeigten Beispiel in mittelbarem Wirkeingriff mit dem Modellträger **7,** wobei die Mittelbarkeit durch die zwischen Modellträger **7** und Druckzylinder **15** angeordnete Tiefziehfolie **4** bedingt ist. Auf diese Weise wird der Druckraum **22** des jeweiligen Druckzylinders **15** dicht abgeschlossen, wobei er zum einen von den Wandungen des Druckzylinders **15** selbst und zum anderen von der Tiefziehfolie **4** begrenzt wird. Die Druckeinrichtungen **9** liegen somit nunmehr in ihrem Druckzustand vor. Daraufhin kann die eigentliche Abformung der Kiefermodelle **8** erfolgen, die auf den Modellträgern **7** gelagert sind.

Mithin beginnt der Formschritt. Hierzu werden die Druckräume **22** der Druckzylinder **15** jeweils mit pneumatischem Überdruck beaufschlagt, der von dem Druckerzeuger **20** zur Verfügung gestellt wird. Dies führt dazu, dass die erhitzte und mithin verformbare Tiefziehfolie **4** über das jeweilige Kiefermodell **8** gedrückt wird und sich hierbei passgenau an das Kiefermodell **8** anlegt. Da die Tiefziehfolie **4** zu ihrer Unterseite hin dicht gegen den jeweiligen Modellträger **7** gedrückt ist, ist es für die Abführung eines zwischen der Tiefziehfolie **4** und dem jeweiligen Modellträger **7** befindlichen Luftpolsters in dem gezeigten Beispiel vorgesehen, dass die Modellträger **7** jeweils eine Mehrzahl von Entlüftungsöffnungen aufweisen, durch die hindurch die überschüssige Luft entweichen kann. Auf diese Weise kann sich die Tiefziehfolie **4** ohne hinderliche Luftanschlüsse passgenau an die Kiefermodelle **8** anlegen.

In diesem Zustand, in dem die Druckräume **22** der Druckzylinder **15** mit Druck beaufschlagt sind, verbleibt die Druckformvorrichtung **1** anschließend für eine Abkühlzeit, in der die Temperatur der Tiefziehfolie **4** sinkt und die Tiefziehfolie **4** infolgedessen wieder erstarrt. Die Dauer der Abkühlzeit kann insbesondere von der Steuereinrichtung **23** vorgegeben werden. Nach Beendigung der Abkühlzeit wird der Überdruck aus den Druckräumen **22** entlassen, woraufhin die Druckzylinder **15** entlang den Arbeitsachsen **10** wieder zurück in ihre zugehörigen Stellzylinder **16** einfahren können. Der Formschritt ist beendet. Das Ablassen des Überdrucks wird hier ebenfalls infolge Ansteuerung durch die Steuereinrichtung **23** ausgelöst. Die hier gezeigte Druckformvorrichtung **1** umfasst für das Einfahren der Druckzylinder **15** zwei einander gegenüberliegend seitlich an dem Gehäuse **2** angeordneten Rückstelleinrichtungen **21,** die jeweils von einer Gasfeder gebildet sind. Die Rückstelleinrichtungen **21** sind dahingehend vorgespannt, dass sie in Abwesenheit eines Überdrucks in dem jeweiligen Druckraum **17** die Druckzylinder **15** zurück in den zugehörigen Stellzylinder **16** einschieben. Die Druckeinrichtungen **9** werden auf diese Weise wieder zurück in ihren Wartezustand überführt und dort gehalten.

Abschließend wird die Bewegungseinrichtung **11** wieder zurückbewegt, sodass die Heizeinrichtungen 6 jeweils in ihren Arbeitsstellungen vorliegen und die Modellträger **7** mitsamt den darauf befindlichen Kiefermodellen **8** und der darüber tiefgezogen Tiefziehfolie **4** an einem vorderen Ende des Gehäuses **2** hervorragen. Der Folienträger **3** befindet sich nach dem Abschluss des Formschritts des Tiefziehvorgangs in einer gegenüber seiner Bestückstellung abgesenkten Stellung, die er für die Durchführung des Formschritts eingenommen hatte. Um den Folienträger **3** in dieser Stellung zu halten, wenn die Druckzylinder **15** wieder in die Stellzylinder **16** einfahren, wird der Folienträger **3** mittels in den Figuren nicht dargestellter mechanischer Halteeinrichtungen gehalten, die den Folienträger **3** formschlüssig greifen, sobald er bis auf die Bewegungseinrichtung **11** bzw. die Modellträger **7** abgesenkt ist. Bei dem Hochfahren der Druckzylinder **15** nach Abschluss des Formschritts wird die magnetische Haltekraft, die zwischen den an den Druckzylindern **15** angeordneten Magneten und dem Folienträger 3 besteht, überwunden, sodass sich der Folienträger **3** von den Druckzylindern **15** löst und in der abgesenkten Stellung verbleibt.

Der Folienträger **3** wird daraufhin mittels der Bewegungseinrichtung **11** in horizontale Richtung bzw. senkrecht zu den Arbeitsachsen **10** aus dem Gehäuse **2** heraus bewegt und kann schließlich händisch entnommen werden, wobei die über die Kiefermodelle **8** tiefgezogene Tiefziehfolie **4** mit entnommen wird. Aufgrund des prinzipbedingten Umschließens der Kiefermodelle **8** mittels der Tiefziehfolie **4** im Zuge des Formschritts werden ebenfalls die Kiefermodelle **8** entnommen, die gewissermaßen in der Tiefziehfolie **4** "gefangen" bzw. von dieser "eingefasst" sind. Für die schlussendliche Herstellung der fertigen Zahnschienen für eine jeweilige kieferorthopädische Behandlung ist es nunmehr lediglich noch erforderlich, die einzelnen Folienabschnitte, die die Negative der abgeformten Kiefermodelle **8** darstellen, aus der Tiefziehfolie **4** in an sich bekannter Weise herauszuarbeiten.

### Bezugszeichenliste

- 1: Druckformvorrichtung
- 2: Gehäuse
- 3: Folienträger
- 4: Tiefziehfolie
- 5: Arbeitseinheit
- 6: Heizeinrichtung
- 7: Modellträger
- 8: Kiefermodell
- 9: Druckeinrichtung
- 10: Arbeitsachse
- 11: Bewegungseinrichtung
- 12: Bewegungsachse
- 13: Wirkebene
- 14: Ausnehmung
- 15: Druckzylinder
- 16: Stellzylinder
- 17: Druckraum
- 18: Druckleitung
- 19: Druckleitung
- 20: Druckerzeuger
- 21: Rückstelleinrichtung
- 22: Druckraum
- 23: Steuereinrichtung
- 24: Bedienpaneel
- 25: Trägerführung
- 26: Querachse
- 27: Schaft
- 28: Schiene

## Patentansprüche

1. Druckformvorrichtung (1) für die Verwendung in der dentalen Tiefziehtechnik, umfassend
- ein Gehäuse (2),
- einen Folienträger (3) zur Lagerung mindestens einer Tiefziehfolie (4),
- mindestens eine zumindest teilweise in dem Gehäuse (2) angeordnete Arbeitseinheit (5), die
i) eine Heizeinrichtung (6) zum Erhitzen der Tiefziehfolie (4) auf eine Tiefziehtemperatur,
ii) einen Modellträger (7) zur Lagerung eines Kiefermodells (8) und
iii) eine Druckeinrichtung (9) zur Bereitstellung eines pneumatischen Drucks umfasst,
wobei die Druckeinrichtung (9) dazu vorgesehen und eingerichtet ist, zur Durchführung eines Tiefziehvorgangs derart mit der Tiefziehfolie (4) und dem Modellträger (7) zusammenzuwirken, dass die Tiefziehfolie (4) nach Durchführung eines Heizschritts des Tiefziehvorgangs, in dem die Tiefziehfolie (4) mittels der Heizeinrichtung (6) erhitzt wird, in einem Formschritt des Tiefziehvorgangs mit pneumatischem Druck beaufschlagt und dadurch über das auf dem Modellträger (7) gelagerte Kiefermodell (8) tiefgezogen wird,
wobei zumindest ein Druckzylinder (15) der Druckeinrichtung (9) und der Modellträger (7) entlang einer Arbeitsachse (10) der Arbeitseinheit (5) relativ aufeinander zu bewegbar sind, sodass sich die Druckeinrichtung (9) zur Durchführung des Formschritts in mittelbaren oder unmittelbaren Wirkeingriff mit dem Modellträger (7) bringbar ist,
**dadurch gekennzeichnet, dass**
sowohl die Heizeinrichtung (6) als auch der Modellträger (7) auf derselben Seite der Tiefziehfolie (4) angeordnet sind,
wobei die Heizeinrichtung (6) und der Modellträger (7) mittels einer Bewegungseinrichtung (11) wechselweise in eine entlang der Arbeitsachse (10) befindliche Arbeitsstellung überführbar sind.

2. Druckformvorrichtung (1) nach Anspruch 1, **dadurch gekennzeichnet, dass** die Heizeinrichtung (6) und der Modellträger (7) mittels der Bewegungseinrichtung (11) in einer senkrecht zu der Arbeitsachse (10) orientieren Wirkebene (13) bewegbar sind, wobei vorzugsweise die Bewegungseinrichtung (11) von einer entlang einer Bewegungsachse (12) linear beweglichen Schublade gebildet ist.

3. Druckformvorrichtung (1) nach einem der vorhergehenden Ansprüche, **gekennzeichnet durch** eine Mehrzahl von in dem Gehäuse (2) angeordneten Arbeitseinheiten (5), wobei vorzugsweise die Arbeitsachsen (10) der Arbeitseinheiten (5) jeweils vertikal orientiert sowie parallel zueinander angeordnet sind, wobei weiter vorzugsweise die Arbeitseinheiten (5) horizontal nebeneinander angeordnet sind.

4. Druckformvorrichtung (1) nach Anspruch 3, **dadurch gekennzeichnet, dass** der Folienträger (3) rechteckförmig ausgebildet ist, wobei sich der Folienträger (3) entlang sämtlicher Arbeitseinheiten (5) erstreckt und eine der Anzahl der Arbeitseinheiten (5) entsprechende Anzahl von Ausnehmungen (14) aufweist, die jeweils einer der Arbeitseinheiten (5) zugeordnet sind.

5. Druckformvorrichtung (1) nach einem der vorhergehenden Ansprüche, **dadurch gekennzeichnet, dass** der Folienträger (3) in Form einer Schublade ausgebildet ist, die linear zwischen einer Bestückstellung, in der der Folienträger (3) händisch mit einer Tiefziehfolie (4) bestückbar ist, und einer Heizstellung, in der eine auf dem Folienträger (3) gelagerte Tiefziehfolie (4) mittels der Heizeinrichtung (6) erhitzbar ist, überführbar ist.

6. Druckformvorrichtung (1) nach Anspruch 5, **gekennzeichnet durch** einen Schalter, der derart angeordnet ist, dass er infolge der Überführung des Folienträgers (3) in dessen Heizstellung betätigt wird, wobei der Schalter mit einer Steuereinrichtung (23) wirkverbunden ist, die dazu eingerichtet ist, infolge der Betätigung die Heizeinrichtung (6) zu aktivieren.

7. Druckformvorrichtung (1) nach einem der vorhergehenden Ansprüche, **dadurch gekennzeichnet, dass** die mindestens eine Druckeinrichtung (9) zwischen einem Wartezustand und einem Druckzustand überführbar ist, wobei zur Überführung der Druckeinrichtung (9) von dem Wartezustand in den Druckzustand der Druckzylinder (15) entlang der Arbeitsachse (10) in Richtung auf den Modellträger (7) zu bewegbar ist, bis sich die Druckeinrichtung (9) in Wirkverbindung mit dem Modellträger (7) befindet.

8. Druckformvorrichtung (1) nach einem der vorhergehenden Ansprüche, **dadurch gekennzeichnet, dass** der Druckzylinder (15) mittels einer Druckleitung (18) mit einem Druckerzeuger (20) zur Erzeugung eines pneumatischen Drucks verbunden ist, sodass mittels des Druckerzeugers (20) in dem Formschritt ein Überdruck in dem Druckzylinder (15) erzeugbar und mittels der Druckzylinders (15) auf die Tiefziehfolie (4) aufbringbar ist, infolgedessen die Tiefziehfolie (4) über das Kiefermodell (8) gedrückt wird.

9. Druckformvorrichtung (1) nach Anspruch 8, **dadurch gekennzeichnet, dass** die Druckeinrichtung (9) einen Stellzylinder (16) umfasst, innerhalb dessen der Druckzylinder (15) als Kolben geführt ist, wobei der Stellzylinder (16) mit dem Druckzylinder (15) einen Druckraum (17) begrenzt, der mittels einer Druckleitung (19) mit demselben oder einem anderen Druckerzeuger (20) verbunden ist, sodass der Druckzylinder (15) infolge einer Beaufschlagung des Druckraums (17) mit pneumatischem Druck entlang der Arbeitsachse (10) bewegbar ist.

10. Druckformvorrichtung (1) nach Anspruch 9, **gekennzeichnet durch** eine Rückstelleinrichtung (21), insbesondere in Form einer Gasfeder, mittels dessen der Druckzylinder (15) nach Abschluss des Formschritts entlang der Arbeitsachse (10) zurück bewegbar ist.

11. Verfahren zur Durchführung eines Tiefziehvorgangs zum Tiefziehen einer Tiefziehfolie (4) über mindestens ein Kiefermodell (8) mittels einer Druckformvorrichtung (1), umfassend die folgenden Verfahrensschritte:
a) Ein Folienträger (3) wird mit einer Tiefziehfolie (4) bestückt;
b) Die Tiefziehfolie (4) wird in einem Heizschritt des Tiefziehvorgangs mittels einer Heizeinrichtung (6) erhitzt, sodass die Tiefziehfolie (4) dazu geeignet ist, über ein Kiefermodell (8) tiefgezogen zu werden;
c) Nach Abschluss des Heizschritts werden ein Druckzylinder (15) einer Druckeinrichtung (9) und ein Modellträger (8), auf dem das Kiefermodell (7) gelagert ist, entlang einer Arbeitsachse (10) relativ aufeinander zu bewegt, wodurch die Druckeinrichtung (9) und der Modellträger (7) in mittelbaren oder unmittelbaren Wirkeingriff geraten;
d) Die Tiefziehfolie (4) wird in einem Formschritt des Tiefziehvorgangs mittels eines in dem Druckzylinder (15) der Druckeinrichtung (9) erzeugten pneumatischen Drucks über das Kiefermodell (8) tiefgezogen;
**dadurch gekennzeichnet, dass**
e) Nach dem Abschluss des Heizschritts und vor Durchführung des Formschritts wird die Heizeinrichtung (6) mittels einer Bewegungseinrichtung (11) aus ihrer Arbeitsstellung, in der sie entlang der Arbeitsachse (10) auf einer Seite der Tiefziehfolie (4) angeordnet ist, wegbewegt und der Modellträger (7) mittels der Bewegungseinrichtung (11) in seine Arbeitsstellung bewegt, in der er sodann entlang der Arbeitsachse (10) auf der genannten Seite der Tiefziehfolie (4) angeordnet ist.

12. Verfahren nach Anspruch 11, **dadurch gekennzeichnet, dass** die Bewegungseinrichtung (11) die Bewegung der Heizeinrichtung (6) weg aus deren Arbeitsstellung und die Bewegung des Modellträgers (7) in dessen Arbeitsstellung in einer gemeinsamen Bewegung ausführt.

13. Verfahren nach Anspruch 11 oder 12, **dadurch gekennzeichnet, dass** die Heizeinrichtung (6) automatisch aktiviert wird, sobald der Folienträger (3) mitsamt der darauf gelagerten Tiefziehfolie (4) in eine Heizstellung, in der die Tiefziehfolie (4) mittels der Heizeinrichtung (6) erhitzbar ist, überführt wird.

14. Verfahren nach einem der Ansprüche 11 bis 13, **dadurch gekennzeichnet, dass** die Druckeinrichtung (9) zur Durchführung des Formschritts infolge Ansteuerung durch die Steuereinrichtung (23) automatisch ausgehend von einem Wartezustand in einen Druckzustand überführt wird, wobei zur Überführung der Druckeinrichtung (9) von dem Wartezustand in den Druckzustand der Druckzylinder (15) relativ auf den Modellträger (7) zu bewegt wird und nach mittelbarem oder unmittelbaren Wirkeingriff mit dem Modellträger (7) automatisch ein pneumatischer Druck, vorzugsweise in Form eines Überdrucks, auf die Tiefziehfolie (4) ausgeübt wird, infolgedessen die Tiefziehfolie (4) über das Kiefermodell (8) tiefgezogen wird.

15. Verfahren nach Anspruch 14, **dadurch gekennzeichnet, dass** der pneumatische Druck der Druckeinrichtung (9) nach einer Abkühlzeit infolge Ansteuerung durch die Steuereinrichtung (23) automatisch abgelassen und die Druckeinrichtung (9) automatisch zurück in ihren Wartezustand überführt werden.

## Claims

1. A pressure forming device (1) for dental deep drawing applications, the pressure forming device comprising:
- a housing (2);
- a foil carrier (3) configured to support a deep drawing foil (4);
- at least one operating unit (5) at least partially arranged in the housing (2) and including
i) a heating device (6) configured to heat the deep drawing foil (4) to a deep drawing temperature;
ii) a model carrier (7), configured to support a jaw model (8); and
iii) a pressure device (9), configured to provide a pneumatic pressure,
wherein the pressure device (9) is configured to cooperate with the deep drawing foil (4) and the model carrier (7) when performing a deep drawing process, so that the deep drawing foil (4), after performing a heating step of the deep drawing process in which the deep drawing foil (4) heated by the heating device (6), is loaded with pneumatic pressure in a forming step of the deep drawing process and thus deep drawn over the jaw model (8) supported on the model carriers (7),
wherein a pressure cylinder (15) of the pressure device (9) and the model carrier (7) are movable towards one another along an operating axis (10) of the operating unit (5), so that the pressure device (9) is movable into indirect or direct operating engagement with the model carrier (7) in order to perform the forming step,
**characterized in that**
wherein the heating device (6) and the model carrier (7) are arranged on an identical side of the deep drawing foil (4),
wherein the heating device (6) and the model carrier (7) are alternatively movable by a movement device (11) into an operating position that is arranged along the operating axis (10).

2. The pressure forming device (1) according to claim 1, **characterized in that** the heating device (6) and the model carrier (7) are movable by the movement device (11) into an operating plane (13), oriented perpendicular to the operating axis (10), and wherein the movement device (11) is formed by a drawer that is movable along a linear path along a movement axis (12).

3. The pressure forming device (1) according to one of the previous claims, **characterized in that** a plurality of the operating units (5) arranged in the housing (2), wherein operating axes (10) of the operating units (5) are respectively vertically oriented and arranged parallel to one another, and wherein the operating units (5) are arranged horizontally adjacent to one another.

4. The pressure forming device (1) according to claim 3, **characterized in that** the foil carrier (3) is configured rectangular, wherein the foil carrier (3) extends along all operating units (5) and includes a number of cutouts that correspond to a number of the operating units (5), wherein a respective cutout (14) is associated with a respective operating unit (5).

5. The pressure forming device (1) according to one of the previous claims, **characterized in that** the foil carrier (3) is configured as a drawer that is movable on a linear path between a loading position in which the foil carrier (3) is manually loadable with the deep drawing foil (4) and a heating position in which the deep drawing foil (4) supported on the foil carrier (3) is heatable by the heating device (6).

6. The pressure forming device (1) according to claim 5, **characterized in that** a switch, arranged to be actuated by a transfer of the foil carrier (3) into its heating position, wherein the switch is operatively connected with a control device (23) that is configured to activate the heating device (6) when the switch is actuated.

7. The pressure forming device (1) according to claim 1, according to one of the previous claims, **characterized in that** the pressure device (9) is transferrable between an idle condition and a pressure condition, wherein the pressure cylinder (15) is moveable along the operating axis (10) in a direction towards the model carrier (7) until the pressure device (9) is in operating engagement with the model carrier (7), in order to transfer the pressure device (9) from the idle condition into the pressure condition.

8. The pressure forming device according to one of the previous claims, **characterized in that** the pressure cylinder (15) is connected by a pressure conduit (18) with a pressure generator (20) in order to generate a pneumatic pressure, so that the pressure generator is configured to generate a positive pressure in the pressure cylinder (15) during the forming step, wherein the positive pressure is applicable to the deep drawing foil (4) by the pressure cylinder (15), so that the deep drawing foil (4) is pressed over the jaw model (8).

9. The pressure forming device (1) according to claim 8, **characterized in that** the pressure device (9) includes an actuation cylinder (16), within which the pressure cylinder (15) is supported as a piston, wherein the actuation cylinder (16) end the pressure cylinder (15) define a pressure cavity (17), which is connected via a pressure conduit (19) to the same pressure generator or to another pressure generator (20), such that the pressure cylinder (15) is movable along the operating axis (10) due to a loading of the pressure cavity (17) with the pneumatic pressure.

10. The pressure forming device (1) according to claim 9, **characterized by** a reset device (21), in particular a gas spring, configured to return the pressure cylinder (15) along the operating axis (10) after completing the forming step.

11. A method for performing a deep drawing process for deep drawing a deep drawing foil (4) over at least one jaw model (8) using a pressure forming device (1), the method comprising:
a) loading a foil carrier (3) with the deep drawing foil (4);
b) heating the deep drawing foil (4) in a heating step of the deep drawing process using a heating device (6), so that the deep drawing foil is (4) configured to be deep drawn over a jaw model (8);
c) after completing the heating step, moving a pressure cylinder (15) of a pressure device (9) and a model carrier (7), supporting the jaw model (8) along an operating axis (10) towards each other, so that the pressure device (9) and the model carrier (7) come into indirect or direct operating engagement;
d) in a forming step of the deep drawing process, the deep drawing foil (4) is formed over the jaw model (8) by a pneumatic pressure generated in the pressure cylinder (15) of the pressure device (9),
**characterized in that**
e) after completing the heating step and before performing the forming step, the heating device (6) is moved, by means of a movement device (11), away from its operating position, in which it is arranged along the operating axis (10) on one side of the deep drawing foil (4), and the model carrier (7) is moved, by means of the movement device (11), into its operating position, in which it is subsequently arranged along the operating axis (10) on said side of the deep drawing foil (4).

12. The method according to claim 11**, characterized in that,** the movement device (11) performs the movement of the heating device (6) from its operating position and the movement of the model carrier (7) into its operating position in a joint movement.

13. The method according to claim 11 or 12**, characterized in that,** the heating device (6) is activated automatically as soon as the foil carrier (3) including the deep drawing foil (4) arranged thereon is moved into a heating position in which the deep drawing foil (4) is heatable by the heating device (6).

14. The method according to any of the claims 11 to 13, **characterized in that**, for carrying out the forming step, the pressure device (9) is automatically transferred from an idle position into a pressure position under control of the control device (23), wherein, for transforming the pressure device (9) from the standby state into the pressure state, the pressure cylinder (15) is moved towards the model carrier (7), and, after directly or indirectly coming into operative engagement with the model carrier (7), pneumatic pressure, preferably in the form of positive pressure, is automatically applied to the deep drawing foil (4), whereby the deep drawing foil (4) is thermoformed over the jaw model (8).

15. The method according to claim 14, **characterized in that**, the pneumatic pressure of the pressure device (9) is automatically released by control of the control device (23) after a cooling period and the pressure device (9) is automatically transferred back into its idle position.

## Revendications

1. Dispositif de formage sous pression (1), destiné à être utilisé dans la technique de thermoformage dentaire, comprenant
- un boîtier (2),
- un support de film (3), destiné à recevoir au moins un film de thermoformage (4),
- au moins unité de travail (5), placée au moins partiellement dans le boîtier (2), laquelle comprend
i) un système de chauffage (6), destiné à chauffer le film de thermoformage (4) à une température de thermoformage,
ii) un support de modèle (7), destiné à recevoir un modèle de mâchoire (8) et
iii) un système de mise sous pression (9), destiné à fournir une pression pneumatique,
pour réaliser un processus de thermoformage, le système de mise sous pression (9) étant prévu et configuré pour coopérer avec le film de thermoformage (4) et le support de modèle (7), de telle sorte, qu'après la réalisation d'une étape de chauffage du film de thermoformage (4) du processus de thermoformage, lors de laquelle le film de thermoformage (4) est chauffé au moyen du système de chauffage (6), dans une étape de formage du processus de thermoformage, le film de thermoformage (4) soit exposé à une pression pneumatique et soit thermoformé de ce fait par-dessus le modèle de mâchoire (8) reçu sur le support de modèle (7),
au moins un cylindre de pression (15) du système de mise sous pression (9) et le support de modèle (7) étant déplaçables l'un vers l'autre le long d'un axe de travail (10) de l'unité de travail (5), de telle sorte, que pour réaliser l'étape de formage, le système de mise sous pression (9) soit susceptible d'être amené en engagement actif indirect ou direct avec le support de modèle (7),
**caractérisé en ce que**
aussi bien le système de chauffage (6) qu'également le support de modèle (7) sont placés sur le même côté du film de thermoformage (4),
le système de chauffage (6) et le support de modèle (7) étant susceptibles d'être transférés alternativement, au moyen d'un système de déplacement (11) dans une position de travail se trouvant le long de l'axe de travail (10).

2. Dispositif de formage sous pression (1) selon la revendication 1, **caractérisé en ce que** le système de chauffage (6) et le support de modèle (7) sont déplaçables au moyen du système de déplacement (11) dans un plan d'action (13) orienté à la perpendiculaire de l'axe de travail (10), le système de déplacement (11) étant constitué de préférence d'un tiroir, linéairement mobile le long d'un axe de déplacement (12).

3. Dispositif de formage sous pression (1) selon l'une quelconque des revendications précédentes, **caractérisé par** une pluralité d'unités de travail (5) placées dans le boîtier (2), de préférence les axes de travail (10) des unités de travail (5) étant chacun orientés à la verticale et placés à la parallèle les uns des autres, de préférence par ailleurs, les unités de travail (5) étant placées horizontalement côte à côte.

4. Dispositif de formage sous pression (1) selon la revendication 3, **caractérisé en ce que** le support de film (3) est conçu de forme rectangulaire, le support de film (3) s'étendant le long de toutes les unités de travail (5) et comportant un nombre d'évidements (14) correspondant au nombre des unités de travail (5), dont chacun est associé à l'une des unités de travail (5).

5. Dispositif de formage sous pression (1) selon l'une quelconque des revendications précédentes, **caractérisé en ce que** le support de film (3) est conçu sous la forme d'un tiroir, qui est susceptible d'être linéairement transféré entre une position de chargement, dans laquelle le support de film (3) peut être manuellement chargé avec un film de thermoformage (4) et une position de chauffage, dans laquelle un film de thermoformage (4) reçu sur le support de film (3) est susceptible d'être chauffé au moyen du système de chauffage (6).

6. Dispositif de formage sous pression (1) selon la revendication 5, **caractérisé par** un commutateur, qui est placé de sorte à être actionné suite au transfert du support de film (3) dans sa position de chauffage, le commutateur étant en liaison fonctionnelle avec un système de commande (23) qui est configuré pour activer le système de chauffage (6) suite à l'actionnement.

7. Dispositif de formage sous pression (1) selon l'une quelconque des revendications précédentes, **caractérisé en ce que** l'au moins un système de mise sous pression (9) est susceptible d'être transféré entre un état d'attente et un état de mise sous pression, pour transférer le système de mise sous pression (9) de l'état d'attente dans l'état de mise sous pression, le cylindre de pression (15) étant déplaçable le long de l'axe de travail (10), dans la direction du support de modèle (7), jusqu'à ce que le système de mise sous pression (9) se trouve en liaison active avec le support de modèle (7).

8. Dispositif de formage sous pression (1) selon l'une quelconque des revendications précédentes, **caractérisé en ce que** le cylindre de pression (15) est relié, au moyen d'une conduite de pression (18) avec un générateur de pression (20), pour la génération d'une pression pneumatique, de sorte qu'au moyen du générateur de pression (20), dans l'étape de formage, une surpression puisse être générée dans le cylindre de pression (15) et soit applicable sur le film de thermoformage (4) au moyen du cylindre de pression (15), suite à quoi, le film de thermoformage (4) est pressé par-dessus le modèle de mâchoire (8).

9. Dispositif de formage sous pression (1) selon la revendication 8, **caractérisé en ce que** le système de mise sous pression (9) comprend un cylindre de réglage (16) à l'intérieur duquel le cylindre de pression (15) est guidé en tant que piston, le cylindre de réglage (16) délimitant avec le cylindre de pression (15) un espace sous pression (17), qui au moyen d'une conduite de pression (19) est relié avec le même ou avec un autre générateur de pression (20), de sorte que suite à une exposition de l'espace sous pression (17) à une pression pneumatique, le cylindre de pression (15) soit déplaçable le long de l'axe de travail (10).

10. Dispositif de formage sous pression (1) selon la revendication 9, **caractérisé par** un système de rappel (21), notamment sous la forme d'un ressort à gaz, au moyen duquel, après l'achèvement de l'étape de formage, le cylindre de pression (15) est déplaçable en retour le long de l'axe de travail (10).

11. Procédé, destiné à réaliser un processus de thermoformage, pour thermoformer un film de thermoformage (4) par-dessus au moins un modèle de mâchoire (8) au moyen d'un dispositif de formage sous pression (1), comprenant les étapes de procédé suivantes, consistant à :
a) charger un support de film (3) avec film de thermoformage (4) ;
b) dans une étape de chauffage du processus de thermoformage, chauffer le film de thermoformage (4) au moyen d'un système de chauffage (6), de sorte que le film de thermoformage (4) soit apte à être thermoformé par-dessus un modèle de mâchoire (8),
c) après achèvement de l'étape de chauffage, déplacer l'un vers l'autre le long d'un axe de travail (10) un cylindre de pression (15) d'un système de mise sous pression (9) et un support de modèle (8), sur lequel le modèle de mâchoire (7) est reçu, suite à quoi le système de mise sous pression (9) et le support de modèle (7) entrent en engagement actif indirect ou direct ;
d) dans une étape de formage du processus de thermoformage, au moyen d'une pression générée dans le cylindre de pression (15) du système de mise sous pression (9), thermoformer le film de thermoformage (4) par-dessus le modèle de mâchoire (8) ;
**caractérisé en ce que**
e) après l'achèvement de l'étape de chauffage et avant la réalisation de l'étape de formage, au moyen d'un système de déplacement (11), l'on déplace le système de chauffage (6) hors de sa position de travail, dans laquelle il est placé sur un côté du film de thermoformage (4) le long de l'axe de travail (10) et au moyen du système de déplacement (11), l'on déplace le support de modèle (7) dans sa position de travail, dans laquelle il est alors placé sur le côté cité du film de thermoformage (4), le long de l'axe de travail (10).

12. Procédé selon la revendication 11, **caractérisé en ce que** le système de déplacement (11) procède dans un déplacement commun au déplacement du système de chauffage (6) en éloignement de sa position de travail et au déplacement du support de modèle (7) dans sa position de travail.

13. Procédé selon la revendication 11 ou 12, **caractérisé en ce que** le système de chauffage (6) est activé automatiquement dès que le support de film (3) avec le film de thermoformage (4) reçu sur ce dernier est transféré dans une position de chauffage, dans laquelle le film de thermoformage (4) est susceptible d'être chauffé au moyen du système de chauffage (6).

14. Procédé selon l'une quelconque des revendications 11 à 13, **caractérisé en ce que** pour réaliser l'étape de formage, suite à une activation par le système de commande (23), en partant d'un état d'attente, le système de mise sous pression (9) est automatiquement transféré dans un état de mise sous pression, pour transférer le système de mise sous pression (9) de l'état d'attente dans l'état de mise sous pression, le cylindre de pression (15) étant déplacé relativement vers le support de modèle (7) et après engagement actif indirect ou direct avec le support de modèle (7), une pression pneumatique, de préférence sous la forme d'une surpression étant exercée automatiquement sur le film de thermoformage (4), suite à quoi, le film de thermoformage (4) est thermoformé par-dessus le modèle de mâchoire (8).

15. Procédé selon la revendication 14, **caractérisé en ce qu'**après un temps de refroidissement suite à une activation par le système de commande (23), la pression pneumatique du système de mise sous pression (9) est automatiquement évacuée et le système de mise sous pression (9) est transféré automatiquement en retour dans son état d'attente.
